# EUROPEAN PATENT SPECIFICATION

(11) **EP 3 565 375 B1**
(45) Date of publication and mention of the grant of the patent: **23.11.2022**
(21) Application number: 17887468.1
(22) Date of filing: 06.12.2017
(51) Int. Cl.: H04W 8/26, H04W 80/04, H04W 88/02, H04W 88/14

(54) **WIRELESS COMMUNICATION DEVICE, REPEATING DEVICE, WIRELESS COMMUNICATION METHOD, REPEATING METHOD AND INFORMATION PROCESSING METHOD**
DRAHTLOSKOMMUNIKATIONSVORRICHTUNG, REPEATER, DRAHTLOSKOMMUNIKATIONSVERFAHREN, VERSTÄRKUNGSVERFAHREN UND INFORMATIONSVERARBEITUNGSVERFAHREN
DISPOSITIF DE COMMUNICATION SANS FIL, DISPOSITIF DE RÉPÉTITION, PROCÉDÉ DE COMMUNICATION SANS FIL, PROCÉDÉ DE RÉPÉTITION ET PROCÉDÉ DE TRAITEMENT D'INFORMATIONS

(30) Priority: 28.12.2016 JP 2016256267
(43) Date of publication of application: 06.11.2019
(73) Proprietor: Sony Group Corporation, Tokyo 108-0075 (JP)
(72) Inventor: KIMURA, Ryota, Tokyo 108-0075 (JP); TAKANO, Hiroaki, Tokyo 108-0075 (JP); SAWAI, Ryo, Tokyo 108-0075 (JP); TERAOKA, Fumio, Yokohama-shi Kanagawa 223-8522 (JP)
(74) Representative: Witte, Weller & Partner Patentanwälte mbB
(86) International application number: PCT/JP2017/043727
(87) International publication number: WO 2018/123477

(56) References cited:
- EP-A1- 2 782 372
- EP-A2- 1 166 529
- EP-B1- 1 166 529
- JP-A- 2008 104 233
- JP-A- 2010 154 560
- JP-A- 2014 155 140
- US-A1- 2010 158 029

## Description

### Technical Field

The present disclosure relates to a wireless communication device, a relay device, a wireless communication method, a relay method, and an information processing method.

### Background Art

In a cellular network, a relay device called a relay node has been devised. The relay node is located between a base station and a user terminal and has a function of relaying wireless communication therebetween. In one example, in Non-Patent Literature 1 below, the specification for the relay node has been studied in 3GPP. Non-Patent Literature 1 is based on the assumption that the relay node is stationary, and there is no specification considering its motion. To address this, Non-Patent Literature 2 discloses a mechanism relating to a relay node (mobile cell or moving cell) in consideration of motion.

### Citation List

### Non-Patent Literature

Non-Patent Literature 1: Evolved Universal Terrestrial Radio Access (E-UTRA) and Evolved Universal Terrestrial Radio Access Network (E-UTRAN); 3GPP TS 36.300 Release 12 V12.8.0 (2016-01), Overall description; Stage 2
Non-Patent Literature 2: PNEMO-LTE: Realization of Moving Cells in LTE-Advanced Network Using DHCPv6-PD, by Kohei MATSUEDA, Kunitake KANEKO, and Fumio TERAOKA, Information Processing Society of Japan, SIG-MBL-79, May 2016, pp.6

EP 2 782 372 A1 discloses a method for achieving identity and location separation in an Evolved Packet System (EPS) connected to a Packet Data Network (PDN) implemented on and Access Service Router (ASR) such as Packet Data Network Gateway (P-GW).

### Disclosure of Invention

### Technical Problem

The technique disclosed in Non-Patent Literature 2, however, incurs the overhead in processing of tunneling due to use of tunneling. In addition, when a terminal to which an Internet protocol (IP) v6 address is previously assigned is connected to a mobile cell, the core network is necessary to hold route information for each terminal, which results in poor scalability.

In view of this, the present disclosure provides a novel and improved wireless communication device, relay device, server device, wireless communication method, relay method, and information processing method, capable of implementing a mobile cell with satisfactory scalability without using tunneling.

### Solution to Problem

According to the present disclosure, there are provided a wireless communication device implemented as a user equipment or a relay node and a relay device implemented as packet data network gateway as well as corresponding methods according to the independent claims.

The scope of the invention is defined by the appended claims. Any reference to "embodiment(s)", "example(s)", "the present technology" or "aspect(s) of the invention" in this description not falling under the defined scope should be interpreted as illustrative example(s) for understanding the invention.

### Advantageous Effects of Invention

According to the present disclosure as described above, it is possible to provide a novel and improved wireless communication device, relay device, server device, wireless communication method, relay method, and information processing method, capable of implementing a mobile cell with satisfactory scalability without using tunneling.

With or in the place of the above effects, there may be achieved any one of the effects described in this specification or other effects that may be grasped from this specification.

### Brief Description of Drawings

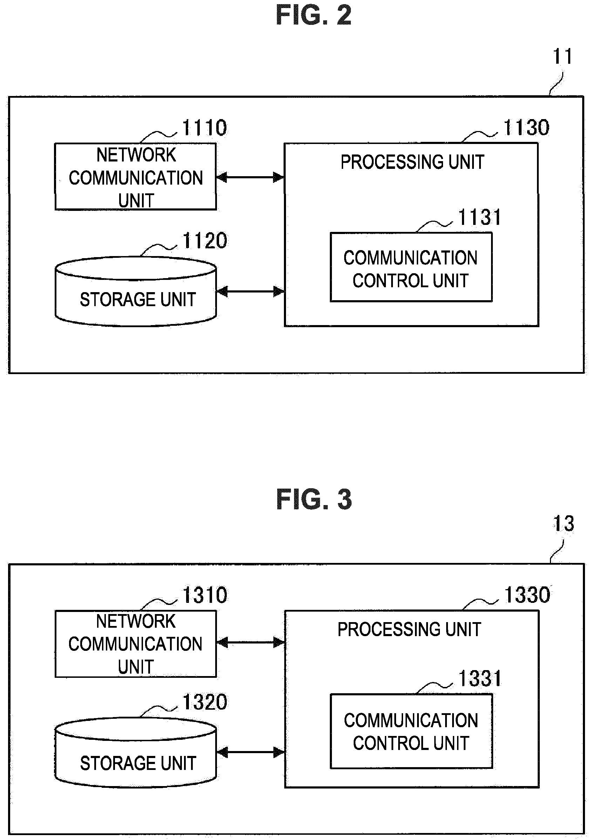

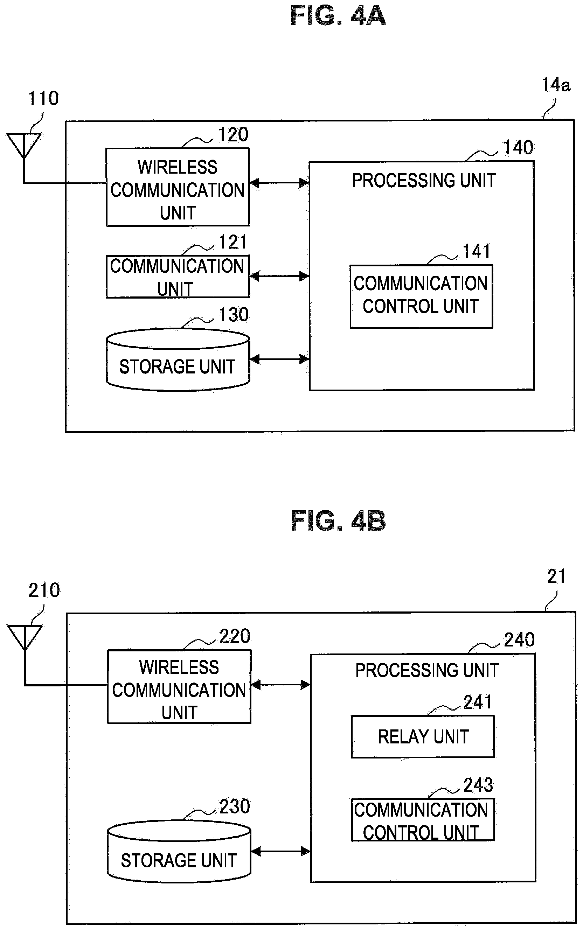

It is noted that only Figures 2, 4a and 4b illustrate embodiments of the present application in accordance with independent claims 1 and 6.
[FIG. 1] FIG. 1 is a diagram illustrated to describe a configuration example of a network system 1 according to an embodiment of the present disclosure.
[FIG. 2] FIG. 2 is a diagram illustrated to describe an example of a functional configuration of a PGW 11 according to an embodiment of the present disclosure.
[FIG. 3] FIG. 3 is a diagram illustrated to describe an example of a functional configuration of an MME 13 according to an embodiment of the present disclosure.
[FIG. 4A] FIG. 4A is a diagram illustrated to describe an example of a functional configuration of an eNB 14a according to an embodiment of the present disclosure.
[FIG. 4B] FIG. 4B is a diagram illustrated to describe an example of a functional configuration of an RN 21 according to an embodiment of the present disclosure.
[FIG. 5] FIG. 5 is a diagram illustrated to describe an initial state in an operation example of the network system 1 according to the present embodiment.
[FIG. 6] FIG. 6 is a diagram illustrated to describe a mapping table held by an MME 13 in an initial state.
[FIG. 7] FIG. 7 is a diagram illustrated to describe a state in which an RN 21 is connected to an eNB 14a.
[FIG. 8] FIG. 8 is a sequence diagram illustrating a message exchange procedure after establishment of a wireless link between an RN 21 and an eNB 14a.
[FIG. 9] FIG. 9 is a diagram illustrated to describe an example of contents of a mapping table held by an MME 13.
[FIG. 10] FIG. 10 is a diagram illustrated to describe transition of an end-point address of a packet transmitted from a CN 3 to an RN 21.
[FIG. 11] FIG. 11 is a sequence diagram illustrating an operation example of a PGW 11 and an MME 13.
[FIG. 12] FIG. 12 is a diagram illustrated to describe a state in which a UE 22 is connected to an RN 21.
[FIG. 13] FIG. 13 is a sequence diagram illustrating a message exchange procedure after establishment of a wireless link between an RN 21 and a UE 22.
[FIG. 14] FIG. 14 is a diagram illustrated to describe an example of contents of a mapping table held by an MME 13.
[FIG. 15] FIG. 15 is a diagram illustrated to describe an example of a mapping table held by an RN 21.
[FIG. 16] FIG. 16 is a diagram illustrated to describe transition of an end-point address of a packet transmitted from a CN 3 to an RN 21.
[FIG. 17] FIG. 17 is a sequence diagram illustrating an operation example of a PGW 11 and an MME 13.
[FIG. 18] FIG. 18 is a diagram illustrated to describe a state in which an RN 31 is connected to an RN 21
[FIG. 19] FIG. 19 is a sequence diagram illustrating a message exchange procedure after establishment of a wireless link between an RN 21 and an RN 31.
[FIG. 20] FIG. 20 is a diagram illustrated to describe an example of contents of a mapping table held by an MME 13.
[FIG. 21] FIG. 21 is a diagram illustrated to describe an example of a mapping table held by an RN 21.
[FIG. 22] FIG. 22 is a diagram illustrated to describe transition of an end-point address of a packet transmitted from a CN 3 to an RN 31.
[FIG. 23] FIG. 23 is a sequence diagram illustrating an operation example of a PGW 11 and an MME 13.
[FIG. 24] FIG. 24 is a diagram illustrated to describe a state in which a UE 32 is connected to an RN 31.
[FIG. 25] FIG. 25 is a sequence diagram illustrating a message exchange procedure after establishment of a wireless link between an RN 31 and a UE 32.
[FIG. 26] FIG. 26 is a diagram illustrated to describe an example of contents of a mapping table held by an MME 13.
[FIG. 27] FIG. 27 is a diagram illustrated to describe an example of a mapping table held by an RN 21.
[FIG. 28] FIG. 28 is a diagram illustrated to describe an example of a mapping table held by an RN 31.
[FIG. 29] FIG. 29 is a diagram illustrated to describe transition of an end-point address of a packet transmitted from a CN 3 to a UE 32.
[FIG. 30] FIG. 30 is a sequence diagram illustrating an operation example of a PGW 11 and an MME 13.
[FIG. 31] FIG. 31 is a diagram illustrated to describe a state in which an RN 21 performs handover from an eNB 14a to an eNB 14b.
[FIG. 32] FIG. 32 is a sequence diagram illustrating a message exchange procedure when an RN 21 performs handover from an eNB 14a to an eNB 14b.
[FIG. 33] FIG. 33 is a diagram illustrated to describe an example of contents of a mapping table held by an MME 13.
[FIG. 34] FIG. 34 is a block diagram illustrating an example of a schematic configuration of a server 700 to which the technology according to the present disclosure can be applied.
[FIG. 35] FIG. 35 is a block diagram illustrating an example of a schematic configuration of a smartphone 900 to which the technology according to the present disclosure can be applied.
[FIG. 36] FIG. 36 is a block diagram illustrating an example of a schematic configuration of a car navigation device 920 to which the technology according to the present disclosure can be applied.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Moreover, the description is given in the following order.
1. Embodiments of present disclosure
   1.1. System configuration example
   1.2. Functional configuration example
   1.3. Operation example
2. Application example
3. Concluding remarks

### <1. Embodiments of present disclosure>

### [1.1. System configuration example]

A configuration example of a network system according to an embodiment of the present disclosure is now described with reference to the drawings.

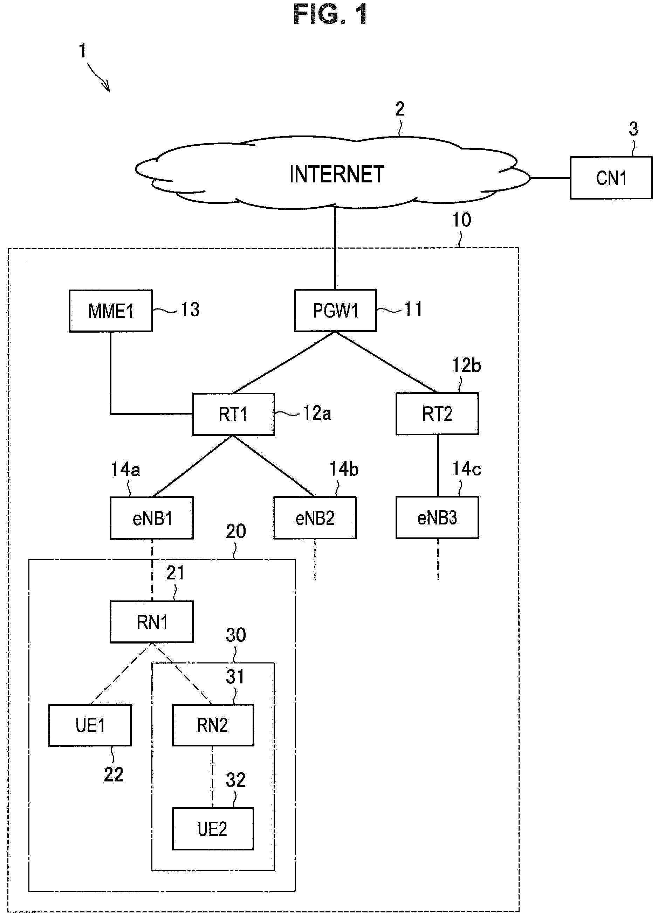

FIG. 1 is a diagram illustrated to describe a configuration example of a network system 1 according to an embodiment of the present disclosure. A configuration example of the network system 1 according to the embodiment of the present disclosure is described below with reference to FIG. 1. For lines connecting between respective components in FIG. 1, a solid line means that they are connected by wire, and a broken line means that they are connected by wireless. Moreover, the way to connect between the components is not necessarily limited to that illustrated in FIG. 1.

As illustrated in FIG. 1, the network system 1 according to the embodiment of the present disclosure includes the Internet 2, a correspondent node (CN) 3, and a domain 10. The CN 3 is a device connected to the Internet 2 and is used for performing communication with communication equipment in the domain 10. An example of the CN 3 includes a web server.

The domain 10 indicates the coverage of a network in which the communication protocol of the present embodiment operates, and is an example of a communication network of the present disclosure. Examples of the domain 10 include one mobile phone network, a mobile phone carrier network, and a core network. This mobile phone network is, in one example, a mobile phone network referred to as so-called 5th generation (5G). In addition, in the present embodiment, the equipment in the domain 10 is operated with IPv6. Moreover, although only one domain is illustrated in FIG. 1, a plurality of domains may exist.

The domain 10 includes packet data network gateway (PGW) 11, routers (RTs) 12a and 12b, mobility management entity (MME) 13, eNodeBs (eNBs) 14a, 14b, and 14c, and a mobile cell 20.

The PGW 11 is connected to the Internet 2 and has a relay function of communication between a communication device inside the domain 10 and a communication device outside the domain 10. The RTs 12a and 12b are routers having a routing function, and they are connected to the PGW 11 at their upper side. The RT 12a is connected to the eNBs 14a and 14b at its lower side, and the RT 12b is connected to the eNB 14c at its lower side. Moreover, the upper side refers to the side closer to the Internet 2. Conversely, the lower side refers to the side far from the Internet 2.

The MME 13 is a device that manages connection locations of communication equipment present inside the mobile cell 20 described later. Although the MME 13 is connected to the RT 12a in the present embodiment, the present disclosure is not limited to such an example.

The eNBs (eNodeB, base station, gNB, gNodeB, or access point) 14a, 14b, and 14c are routers that relay the wired network and the wireless network. Taking the eNB 14a as an example, the eNB 14a is connected to the RT 12a at its upstream side by wired communication and is connected to a relay node (RN or master node) 21 included in the mobile cell 20 at its downstream side by wireless communication.

The mobile cell 20 is collectively referred to as the RN 21 and equipment connected to the downstream side of the RN 21. In the example illustrated in FIG. 1, the mobile cell 20 includes the RN 21, user equipment (UE, user terminal, or mobile terminal) 22, and a nested mobile cell 30. The rectangle of the mobile cell 20 and the rectangle of the mobile cell 30 indicate the ranges of the respective mobile cells. As illustrated in FIG. 1, different mobile cells may be nested relative to one another.

The RN 21 is a mobile router connected to the eNB 14a via a wireless channel. Moreover, the RN 21 may have a function of a terminal device that executes various applications in addition to the function as a router. In the example of FIG. 1, the RN 21 is connected to the eNB 14a at its upstream side, and is connected to an UE 22 and a RN 31 at its downstream side.

The UE 22 is a terminal device that is connected to the RN 21 via a wireless channel and executes various applications. Moreover, the UE 22 may be connected to another device (e.g., eNB 14a) via a wireless channel. The UE connected to the RN is sometimes particularly referred to as a remote UE.

The nested mobile cell 30 is collectively referred to as equipment connected to the downstream side of the RN 21 in the mobile cell 20. The nested mobile cell 30 includes the RN 31 and an UE 32.

The RN 31 is a mobile router connected to the RN 21 via a wireless channel. Moreover, the RN 31 may have a function as a terminal device that executes various applications in addition to the function as a router. The RN having a function as a terminal device that executes various applications may be particularly referred to as a relay UE or a master UE. In the example of FIG. 1, the RN 31 is connected to the RN 21 at its upstream side and is connected to the UE 32 at its downstream side.

The UE 32 is a terminal device that is connected to the RN 31 via a wireless channel and executes various applications. Moreover, the UE 32 may be connected to other devices (e.g., eNB 14a or RN 21) via a wireless channel.

The network system 1 according to the present embodiment has the premise as below.

A maximum of 64 bits of IPv6 prefix (upper 64 bits of IPv6 address) is assigned to one domain. In other words, it is assumed that an IPv6 prefix is assigned in the range managed by the MME. It is assumed that the IPv6 prefix is assigned as Pref_{5G1} to one domain 10 illustrated in FIG. 1.

A plurality of routers may exist inside the Internet 2. Then, it is assumed that routers inside the Internet 2 hold route information relating to the IPv6 prefix assigned to each domain. In FIG. 1, a router inside the Internet 2 holds route information for the domain 10 having a prefix that is Pref_{5G1}.

It is assumed that a unique IPv6 prefix is assigned to a wireless interface of the eNB. In one example, in the present embodiment, the IPv6 prefix that is Pref^{D}_{eNB1} is assigned to the wireless interface of the eNB 14a.

Each node inside the domain (refers to PGW, MME, eNB, RT, and UE) has an identifier of a maximum of 64 bits that is unique in the domain. Each node in the domain has an address with the IPv6 prefix as the upper bit and has an identifier as the lower bit, and performs communication on the basis of the address.

The configuration example of the network system 1 according to the embodiment of the present disclosure is described above.

### [1.2. Functional configuration example]

### (PGW 11)

A functional configuration example of the PGW 11 according to an embodiment of the present disclosure is then described. FIG. 2 is a diagram illustrated to describe a functional configuration example of the PGW 11 according to the embodiment of the present disclosure. The functional configuration example of the PGW 11 according to the embodiment of the present disclosure is now described with reference to FIG. 2.

As illustrated in FIG. 2, the PGW 11 according to the embodiment of the present disclosure includes a network communication unit 1110, a storage unit 1120, and a processing unit 1130.

The network communication unit 1110 is an interface for communicating with other devices. In one example, the PGW 11 communicates with the CN 3 connected to the Internet 2, the MME 13, and the eNBs 14a, 14b, and 14c.

The storage unit 1120 is configured to include, in one example, an HDD or other storage media, and temporarily or permanently stores a program for operations of the PGW 11 and various types of data.

The processing unit 1130 includes, for example, an arithmetic operation device such as CPU, and various memories such as ROM and RAM, and enables the PGW 11 to perform various functions. The processing unit 1130 includes a communication control unit 1131. Moreover, the processing unit 1130 can further include components other than this component. In other words, the processing unit 1130 can also perform operations other than the operation of this component.

The communication control unit 1131 has a function of performing various processing relating to processing of connecting the RN 21 or 31 and the UE 22 or 32 to the Internet 2.

The functional configuration example of the PGW 11 according to the embodiment of the present disclosure is described above.

### (MME 13)

A functional configuration example of the MME 13 according to an embodiment of the present disclosure is then described. FIG. 3 is a diagram illustrated to describe the functional configuration example of the MME 13 according to the embodiment of the present disclosure. The functional configuration example of the MME 13 according to the embodiment of the present disclosure is now described with reference to FIG. 3.

As illustrated in FIG. 3, the MME 13 according to the embodiment of the present disclosure includes a network communication unit 1310, a storage unit 1320, and a processing unit 1330.

The network communication unit 1310 is an interface for communicating with other devices. In one example, the MME 13 communicates with the RT 12a.

The storage unit 1320 is configured to include, in one example, an HDD or other storage media, and temporarily or permanently stores a program for operations of the MME 13 and various types of data. In the present embodiment, the storage unit 1320 of the MME 13 holds a mapping table in which the IPv6 prefix of the wireless interface of the eNB and the connection relationship between the eNB and the RN and between the RNs are registered.

The processing unit 1330 is configured to include, in one example, an arithmetic operation device such as CPU, and various memories such as ROM and RAM, and enables the MME 13 to perform various functions. The processing unit 1330 includes a communication control unit 1331. Moreover, the processing unit 1330 can further include components other than this component. In other words, the processing unit 1330 can also perform operations other than the operation of this component.

The communication control unit 1331 has a function of various processing relating to processing of connecting the RN 21 or 31 and the UE 22 or 32 to the Internet 2.

The functional configuration example of the MME 13 according to the embodiment of the present disclosure is described above.

### (eNB 14a)

A functional configuration example of the eNB 14a according to an embodiment of the present disclosure is then described. FIG. 4A is a diagram illustrated to describe a functional configuration example of the eNB 14a according to the embodiment of the present disclosure. The functional configuration example of the eNB 14a according to the embodiment of the present disclosure is now described with reference to FIG. 4A. In addition, although only the eNB 14a is illustrated in this figure, the eNBs 14b and 14c have also similar configuration.

As illustrated in FIG. 4A, the eNB 14a according to the embodiment of the present disclosure includes an antenna unit 110, a wireless communication unit 120, a communication unit 121, a storage unit 130, and a processing unit 140.

The antenna unit 110 radiates signals output from the wireless communication unit 120 into space as radio waves. In addition, the antenna unit 110 converts radio waves in space into signals and outputs the signal to the wireless communication unit 220.

The wireless communication unit 120 transmits and receives signals. In one example, the wireless communication unit 120 receives an uplink signal from the RN 21 acting as a connection destination and transmits a downlink signal to the RN 21 acting as the connection destination. The communication unit 121 is connected to the RT 12a in the network system 1 illustrated in FIG. 1 and performs communication with each device inside the domain 10.

The storage unit 130 temporarily or permanently stores a program for operation of the eNB 14a and various types of data.

The processing unit 140 enables the eNB 14a to perform various functions. The processing unit 140 includes a communication control unit 141. Moreover, the processing unit 140 can further include components other than this component. In other words, the processing unit 140 can also perform operations other than the operation of this component.

The communication control unit 141 has a function of controlling communication with each device inside the domain 10 or performing connection processing or handover processing with the RN 21 acting as the connection destination.

The functional configuration example of the eNB 14a according to the embodiment of the present disclosure is described above.

### (RN 21)

A functional configuration example of the RN 21 according to an embodiment of the present disclosure is then described. FIG. 4B is a diagram illustrated to describe a functional configuration example of the RN 21 according to the embodiment of the present disclosure. The functional configuration example of the RN 21 according to the embodiment of the present disclosure is now described with reference to FIG. 4B.

As illustrated in FIG. 4B, the RN 21 according to the embodiment of the present disclosure includes an antenna unit 210, a wireless communication unit 220, a storage unit 230, and a processing unit 240.

The antenna unit 210 radiates signals output from the wireless communication unit 220 into space as radio waves. In addition, the antenna unit 210 converts radio waves in space into signals, and outputs the signal to the wireless communication unit 220.

The wireless communication unit 220 transmits and receives signals. In one example, the wireless communication unit 220 receives a downlink signal from the eNB 14a acting as the connection destination and transmits an uplink signal to the eNB 14a acting as the connection destination. In addition, in one example, the wireless communication unit 220 receives the uplink signal from the UE 22 or the RN 31 and transmits the downlink signal to the UE 22 or the RN 31.

The storage unit 230 temporarily or permanently stores a program for the operation of the RN 21 and various types of data.

The processing unit 240 allows the RN 21 to perform various functions. The processing unit 240 includes a relay unit 241 and a communication control unit 243. Moreover, the processing unit 240 can further include components other than this component. In other words, the processing unit 240 can also perform operations other than the operation of this component.

The relay unit 241 has a function of relaying wireless signals between the eNB 14a acting as the connection destination and one or more UEs 22 under control of the relay unit 241 or one or more RNs 31 under control of the relay unit 241. The communication control unit 243 has a function of controlling communication with the UE 22, performing connection processing or handover processing with the eNB 14a acting as the connection destination, or the like.

The functional configuration example of the RN 21 according to the embodiment of the present disclosure is described above. In addition, the UE 31 illustrated in FIG. 1 may have a structure equivalent to the RN 21 except not having a relay function. In other words, the UE 31 does not necessarily include the relay unit 241.

### [1.3. Operation example]

An operation example of the network system 1 according to the present embodiment is then described. An initial state in this operation example is first described.

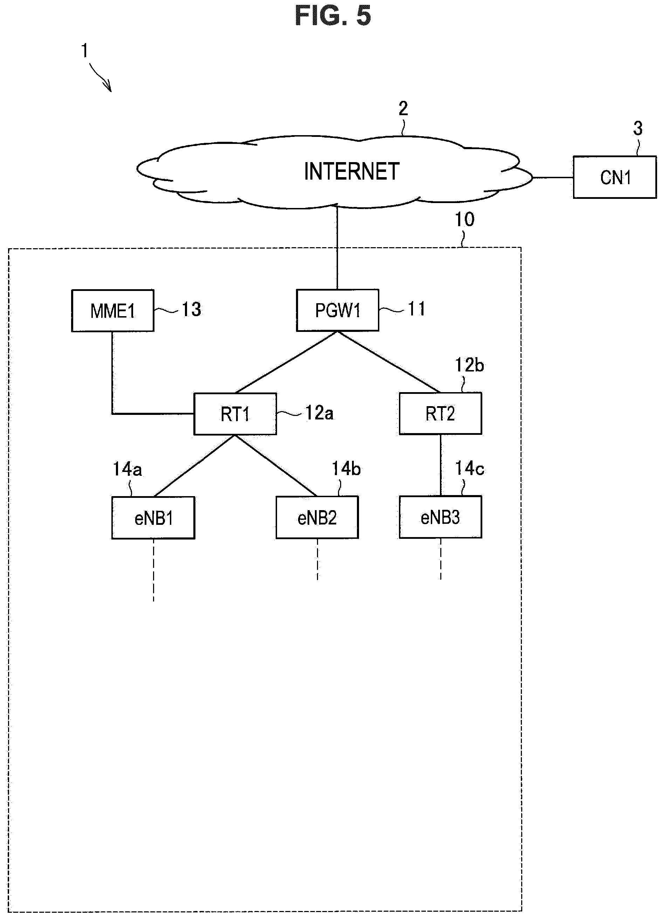

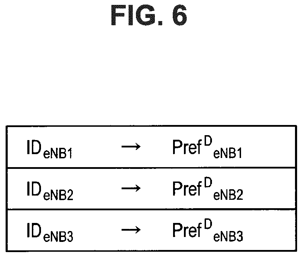

FIG. 5 is a diagram illustrated to describe an initial state in an operation example of the network system 1 according to the present embodiment. In addition, FIG. 6 is a diagram illustrated to describe a mapping table held by the MME13 in the initial state. As described above, the MME 13 holds the IPv6 prefix of the wireless interface of the eNBs 14a, 14b, and 14c in the mapping table. The first row of FIG. 6 indicates that the wireless interface IPv6 prefix of the eNB 14a having an identifier ID_{eNB1} is Pref^{D}_{eNB1}. The second row of FIG. 6 indicates that the wireless interface IPv6 prefix of the eNB 14b having an identifier ID_{eNB2} is Pref^{D}_{eNB2}. The third line of FIG. 6 indicates that the wireless interface IPv6 prefix of the eNB 14c having an identifier ID_{ENB3} is Pref^{D}_{eNB3}.

A state in which the RN 21 having an identifier ID_{RN1} is connected to the eNB 14a from this initial state is described. The RN 21, when being connected to the eNB 14a, generates an IPv6 address of its own node by the following method. Moreover, the identifier ID_{RN1} has a bit width of 64 bits as described above.

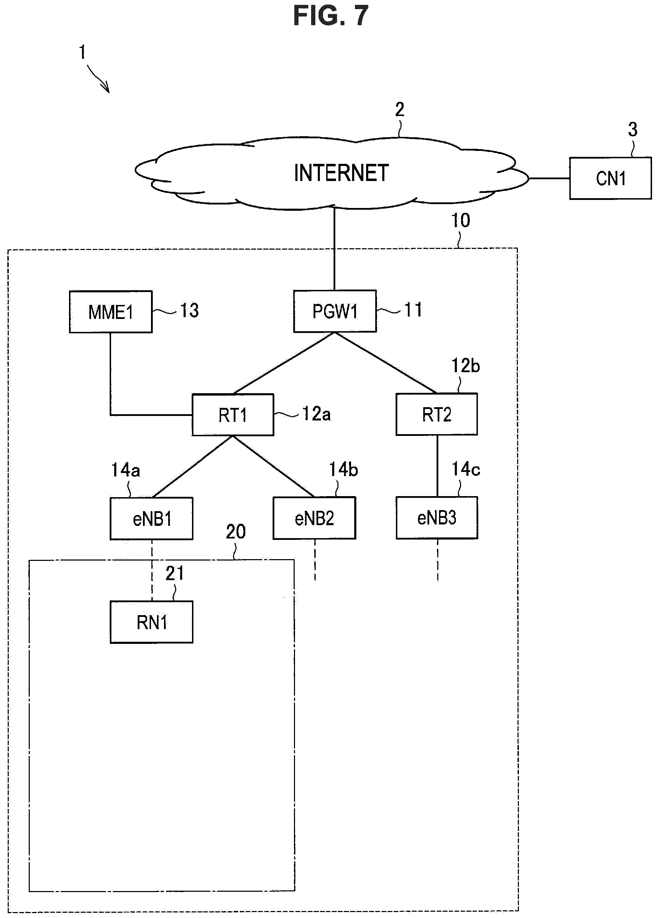

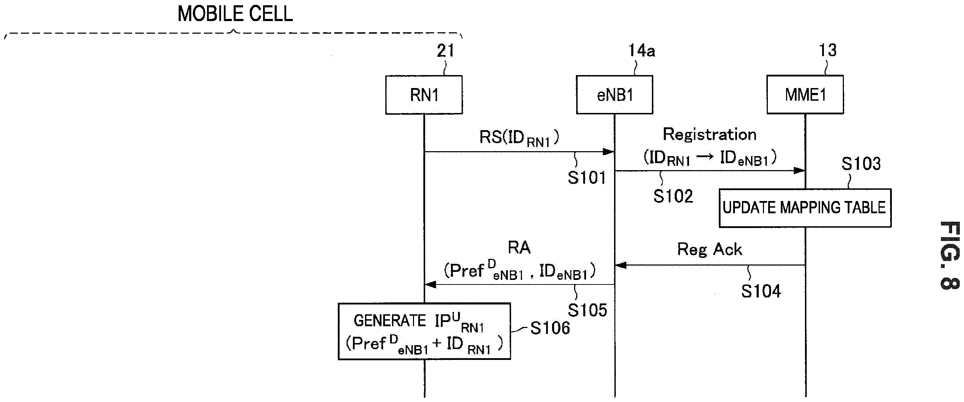

FIG. 7 is a diagram illustrated to describe a state in which the RN 21 is connected to the eNB 14a in the operation example of the network system 1 according to the present embodiment. In addition, FIG. 8 is a sequence diagram illustrating message exchange procedure after establishment of a wireless link between the RN 21 and the eNB 14a.

The RN 21 transmits a router solicitation (RS) message to the eNB 14a (step S101). This message includes ID_{RN1} that is an identifier of the RN 21.

The eNB 14a, when receiving the RS message transmitted from the RN 21, transmits a Registration message corresponding to the RS message to the MME 13 (step S102). This Registration message includes ID_{RN1} that is an identifier of the RN 21 and ID_{eNB1} that is an identifier of eNB 14a.

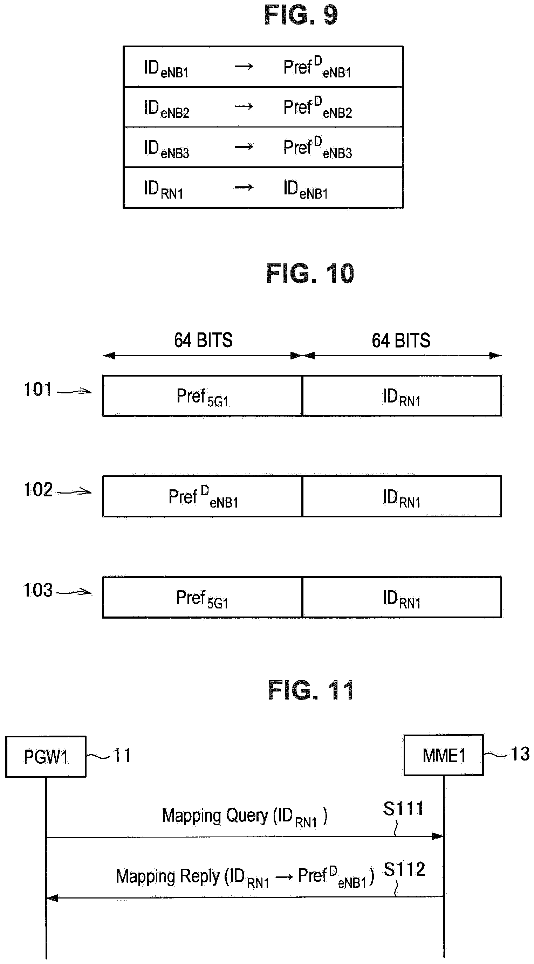

The MME 13, when receiving the Registration message transmitted from the eNB 14a, updates contents of the held mapping table on the basis of contents of the Registration message (step S103). FIG. 9 is a diagram illustrated to describe an example of the contents of the mapping table held by the MME 13. The MME 13 registers information indicating that the RN 21 having the identifier ID_{RN1} is connected to the eNB 14a having the identifier ID_{eNB1} in the mapping table, as in the fourth row of the mapping table on the basis of the Registration message transmitted from the eNB 14a.

The MME 13, when updating the mapping table, replies a Registration acknowledgement (Ack) message indicating that the mapping table is successfully updated to the eNB 14a (step S104). The eNB 14a, when receiving the Registration Ack message from the MME 13, replies a Router Advertisement (RA) message to the RN 21 (step S105). This RA message includes Pref^{D}_{eNB1} that is an IPv6 prefix of the wireless interface of eNB 14a and an ID_{eNB1} that is an identifier of eNB 14a.

The RN 21, when receiving the RA message transmitted from the eNB 14a, generates an IP^{U}_{RN1} that is an IPv6 address of the own node from the Pref^{D}_{eNB1} that is an IPv6 prefix of the wireless interface of the eNB 14a and the ID_{RN1} that is an identifier of the own node (S106).

The packet transmission from the CN 3 that is a node connected to the Internet 2 to the RN 21 is then considered. It is assumed that the CN 3 knows the ID_{RN1} that is an identifier of the RN 21 and the IPv6 prefix Pref_{5G1} of the domain 10 to which the RN 21 is connected.

FIG. 10 is a diagram illustrated to describe transition of an end-point address of a packet transmitted from the CN 3 to the RN 21. The CN 3 generates an IPv6 address denoted by reference numeral 101 as an end-point address. The IPv6 address denoted by reference numeral 101 is obtained by adding the ID_{RN1} that is an identifier of the RN 21 to the IPv6 prefix Pref_{5G1}. As a start-point address, an IP_{CN1} that is an IPv6 address of the CN 3 is used. The router of the Internet 2 holds route information relating to the Pref_{5G1}. Thus, the packet transmitted from the CN 3 reaches the PGW 11.

FIG. 11 is a sequence diagram illustrating an operation example of the PGW 11 and the MME 13. The PGW 11, when receiving the packet from the CN 3, inquires of the MME 13 the IPv6 prefix corresponding to the identifier ID_{RN1} (step S111). The MME 13 refers to the mapping table to know that the RN 21 corresponding to the identifier ID_{RN1} is connected to the eNB (eNB 14a) having the identifier ID_{eNB1}, and further to know that the IPv6 prefix of the wireless interface of the eNB having the identifier ID_{eNB1} is the Pref^{D}_{eNB1}. Then, the MME 13 replies the reference result of the mapping table to the PGW 11 (step S112). In one example, the processing unit 1330 can execute this reply processing. The PGW 11 caches the information replied from the MME 13. The PGW 11, when receiving a packet having the same end-point address after that, does not inquire of the MME 13 but uses cached information. Moreover, the PGW 11 may delete the cached information in accordance with a predetermined condition. An example of the predetermined condition includes a case where a predetermined time has elapsed. In addition, another example of the predetermined condition includes a case where the location of the UE or the RN corresponding to the end-point address fails to be known (e.g., a case where the UE or the RN is powered off or a case where the UE or the RN is out of the coverage of the domain 10). Alternatively, the PGW 11 may delete the cached information in response to the reception of an instruction to clear the cache.

The PGW 11, when acquiring the information from the MME 13, replaces the end-point address as denoted by reference numeral 102. In other words, the PGW 11 replaces the IPv6 prefix Pref_{5G1} with the Pref^{D}_{eNB1}. The processing unit 1130 (the communication control unit 1131 in the processing unit 1130) may perform this replacing. The packet replaced as denoted by reference numeral 102 reaches the RN 21 by the IPv6 routing control inside the domain 10.

The network layer of the RN 21, when receiving the packet having the end-point address denoted by reference numeral 102, replaces the end-point address as denoted by reference numeral 103. The processing unit 240 (the communication control unit 243 in the processing unit 240) may execute this end-point address replacing. In other words, the RN 21 replaces the IPv6 prefix Pref^{D}_{eNB1} with the Pref_{5G1}. The RN 21, when replacing the end-point address, delivers the packet to the upper layer.

This series of packet replacing makes it appear that the communication is being performed between the IPv6 address IP_{CN1} of the CN 3 and the IPv6 address denoted by reference numeral 101 from the viewpoint of the transport layers of the RN 21 and the CN 3 or higher layers.

The packet transmission from the RN 21 to the CN 3 is then considered similarly with reference to FIG. 10. An application running on the RN 21 generates an IPv6 address denoted by reference numeral 103 as a start-point address. The IPv6 address denoted by reference numeral 101 is obtained by adding the ID_{RN1} that is an identifier of the RN 21 to the IPv6 prefix Pref_{5G1}. As an end-point address, the IP_{CN1} that is an IPv6 address of the CN 3 is used.

The network layer of the RN 21 translates the start-point address into the IPv6 address denoted by reference numeral 102. In other words, the RN 21 replaces the IPv6 prefix Pref_{5G1} with the Pref^{D}_{NB1}. The processing unit 240 (the communication control unit 243 in the processing unit 240) may execute this start-point address replacing. The packet replaced as denoted by reference numeral 102 reaches the PGW 11 by the IPv6 routing control inside the domain 10.

The PGW 11, when receiving the packet having the start-point address denoted by reference numeral 102, replaces the start-point address as denoted by reference numeral 103. In other words, the PGW 11 replaces the IPv6 prefix Pref^{D}_{eNB1} with the Pref_{5G1}. The processing unit 1130 (the communication control unit 1131 in the processing unit 1130) may perform this replacing. The PGW 11, when replacing the start-point address, transmits the replaced packet to the Internet 2. The packet reaches the CN 3 by the routing control of the Internet 2.

This series of packet replacing makes it appear that the communication is being performed between the IPv6 address IP_{CN1} of the CN 3 and the IPv6 address denoted by reference numeral 101 from the viewpoint of the transport layers of the RN 21 and the CN 3 or higher layers.

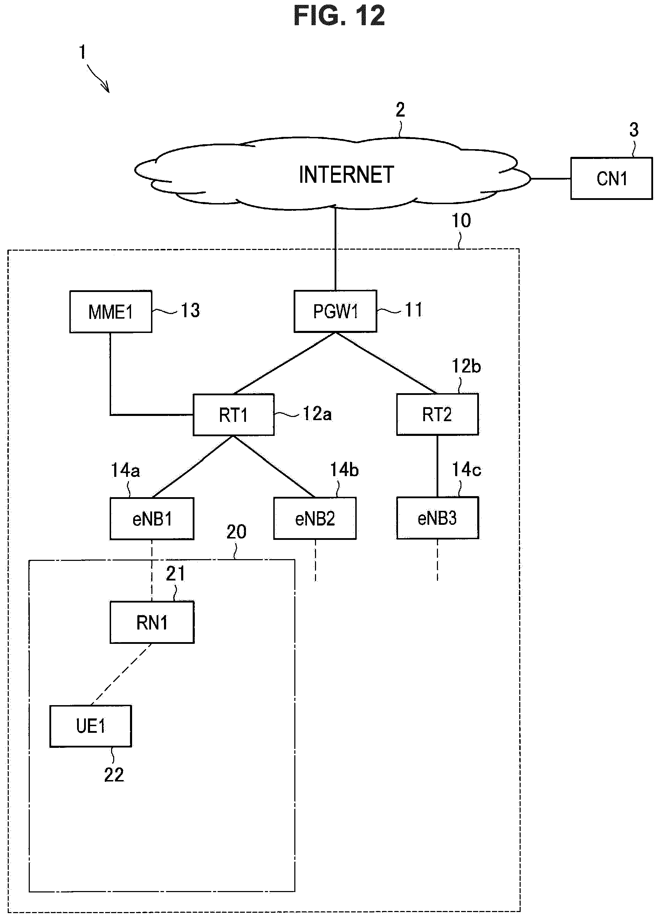

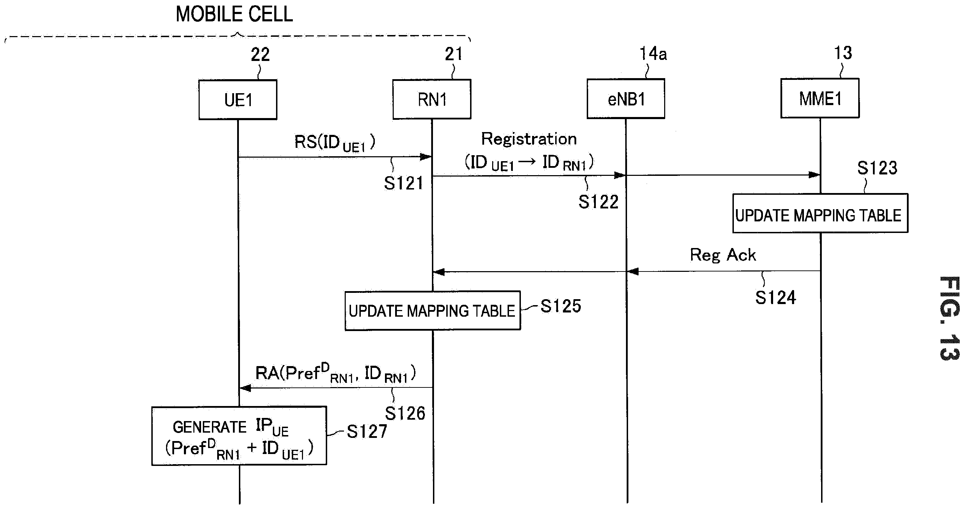

The operation in the case where the UE 22 having the identifier ID_{UE1} is connected to the RN 21 in the state illustrated in FIG. 7 is then described. FIG. 12 is a diagram illustrated to describe a state in which the UE 22 having the identifier ID_{UE1} is connected to the RN 21. In addition, FIG. 13 is a sequence diagram illustrating a message exchange procedure after establishment of a wireless link between the RN 21 and the UE 22.

The UE 22 transmits an RS message to the RN 21 (step S121). This message includes an ID_{UE1} that is an identifier of the UE 22.

The RN 21, when receiving the RS message from the UE 22, transmits a Registration message to the MME 13 (step S122). This Registration message includes an ID_{RN1} that is an identifier of the RN 21 and an ID_{UE1} that is an identifier of the UE 22.

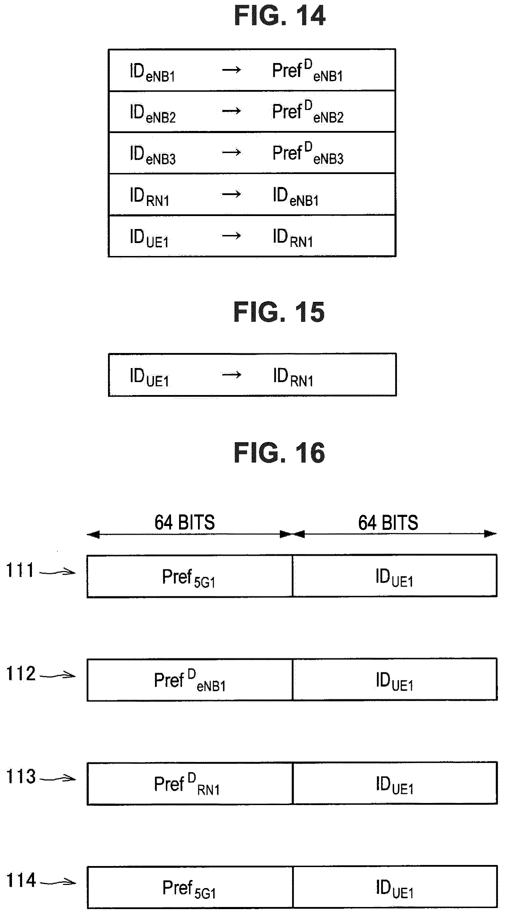

The MME 13, when receiving the Registration message transmitted from the RN 21, the MME 13 updates the contents of the held mapping table on the basis of the contents of the Registration message (step S123). FIG. 14 is a diagram illustrated to describe an example of the contents of the mapping table held by the MME 13. The MME 13 registers the information indicating that the UE 22 having the identifier ID_{UE1} is connected to the RN 21 having the identifier ID_{RN1} in the mapping table on the basis of the Registration message transmitted from the RN 21 as in the fifth row of the mapping table.

The MME 13, when updating the mapping table, replies a Registration Ack message indicating that the mapping table is successfully updated to the RN 21 (step S124). The RN 21, when receiving the Registration Ack message from the MME 13, updates the mapping table held by the own node (step S125). FIG. 15 is a diagram illustrated to describe an example of the mapping table held by the RN 21.

The RN 21, when updating the mapping table, replies an RA message to the UE 22 (step S126). This RA message includes a Pref^{D}_{RN1} that is an IPv6 prefix of the downstream interface of the RN 21 and an ID_{RN1} that is an identifier of the RN 21.

The UE 22, when receiving the RA message transmitted from the RN 21, generates an IP_{UE1} that is an IPv6 address of the own node, from the Pref^{D}_{RN1} that is an IPv6 prefix of the wireless interface of the RN 21 and the ID_{UE1} that is an identifier of the own node (step S127).

The packet transmission from the CN 3 that is a node connected to the Internet 2 to the UE 22 is then considered. It is assumed that the CN 3 knows the ID_{UE1} that is an identifier of the UE 22 and the IPv6 prefix Pref_{5G1} of the domain 10 to which the UE 22 is connected.

FIG. 16 is a diagram illustrated to describe transition of an end-point address of a packet transmitted from the CN 3 to the RN 21. The CN 3 generates an IPv6 address denoted by reference numeral 111 as an end-point address. The IPv6 address denoted by reference numeral 111 is obtained by adding the ID_{UE1} that is an identifier of the UE 22 to the IPv6 prefix Pref_{5G1}. As the start-point address, the IP_{CN1} that is an IPv6 address of the CN 3 is used. The router of the Internet 2 holds route information relating to the Pref_{5G1}. Thus, the packet transmitted from the CN 3 reaches the PGW 11.

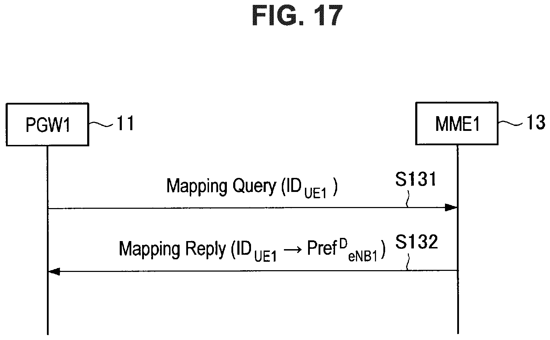

FIG. 17 is a sequence diagram illustrating an operation example of the PGW 11 and the MME 13. The PGW 11, when receiving the packet from the CN 3, inquires of the MME 13 the IPv6 prefix corresponding to the identifier ID_{UE1} (step S131). The MME 13 refers to the mapping table to know that the UE 22 corresponding to the identifier ID_{UE1} is connected to the RN (RN 21) having the identifier ID_{RN1}, know that the RN 21 corresponding to the identifier ID_{RN1} is connected to the eNB (eNB 14a) having the identifier ID_{eNB1}, and further know that the IPv6 prefix of the wireless interface of the eNB having the identifier ID_{eNB1} is the Pref^{D}_{eNB1}. Then, the MME 13 replies the reference result of the mapping table to the PGW 11 (step S132). The PGW 11 caches the information replied from the MME 13. The PGW 11, when receiving a packet having the same end-point address after that, does not inquire of the MME 13 but uses cached information.

The PGW 11, when acquiring the information from the MME 13, replaces the end-point address as denoted by a reference numeral 112. In other words, the PGW 11 replaces the IPv6 prefix Pref_{5G1} with the Pref^{D}_{eNB1}. The packet replaced as denoted by reference numeral 112 reaches the RN 21 by the IPv6 routing control inside the domain 10.

The RN 21, when receiving the packet, refers to the mapping table of the own node and knows that the UE 22 corresponding to the identifier ID_{UE1} is connected to the own node. Then, the RN 21 replaces the end-point address as denoted by reference numeral 113. In other words, the RN 21 replaces the IPv6 prefix Pref^{D}_{eNB1} with the Pref^{D}_{RN1}.

The network layer of the UE 22, when receiving the packet having the end-point address denoted by reference numeral 113, replaces the end-point layer address as denoted by reference numeral 114. In other words, the UE 22 replaces the IPv6 prefix Pref^{D}_{RN1} with the Pref_{5G1}. The UE 22, when replacing the end-point address, delivers the packet to the upper layer.

This series of packet replacing makes it appear that communication is being performed between the IPv6 address IP_{CN1} of the CN 3 and the IPv6 address denoted by reference numeral 111 from the viewpoint of the transport layers of the UE 22 and the CN 3 and higher layers.

The packet transmission from the UE 22 to the CN 3 is then considered. An application running on the UE 22 generates an IPv6 address denoted by reference numeral 114 as a start-point address. The IPv6 address denoted by reference numeral 114 is obtained by adding the ID_{UE1} that is an identifier of the UE 22 to the IPv6 prefix Pref_{5G1}. As an end-point address, the IP_{CN1} that is an IPv6 address of the CN 3 is used.

The network layer of the UE 22 translates the start-point address into the IPv6 address denoted by reference numeral 113. In other words, the UE 22 replaces the IPv6 prefix Pref_{5G1} with the Pref^{D}_{UE1}. The packet replaced as denoted by reference numeral 113 reaches the RN 21.

The RN 21 translates the start-point address into the IPv6 address denoted by reference numeral 112. In other words, the RN 21 replaces the IPv6 prefix Pref_{5G1} with the Pref^{D}_{eNB1}. The packet replaced as denoted by reference numeral 112 reaches the PGW 11 by the routing control inside the domain 10.

The PGW 11, when receiving the packet having the start-point address denoted by reference numeral 112, replaces the start-point address as denoted by reference numeral 111. In other words, the PGW 11 replaces the IPv6 prefix Pref^{D}_{eNB1} with the Pref_{5G1}. The PGW 11, when replacing the start-point address, transmits the replaced packet to the Internet 2. The packet reaches the CN 3 by the routing control of the Internet 2.

This series of packet replacing makes it appear that communication is being performed between the IPv6 address IP_{CN1} of the CN 3 and the IPv6 address denoted by reference numeral 114 from the viewpoint of the transport layers of the UE 22 and the CN 3 and higher layers.

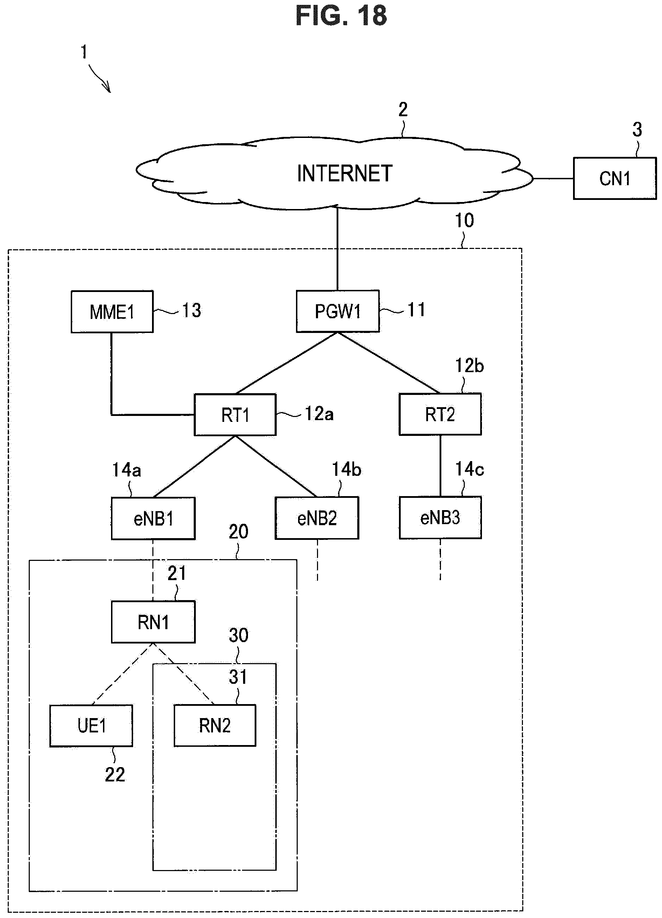

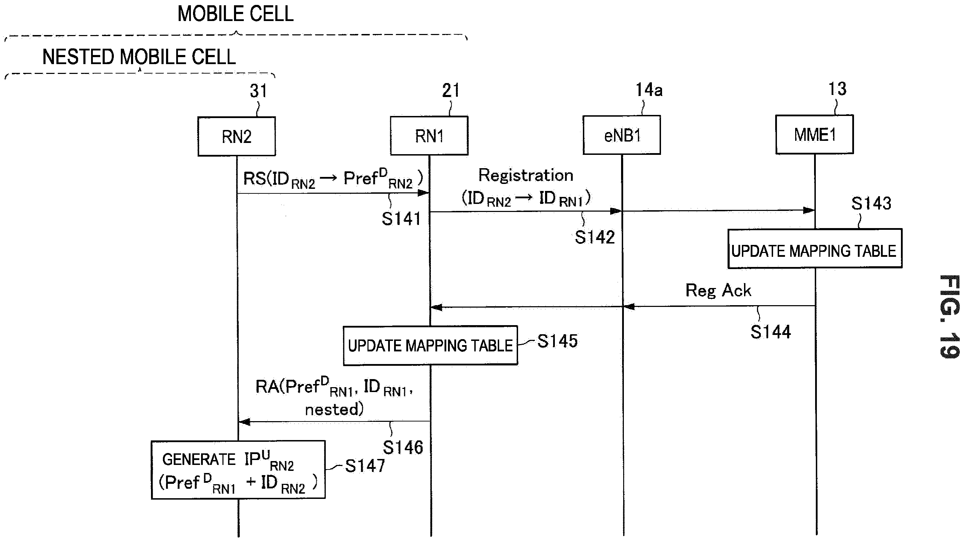

The operation in the case where the RN 31 having the identifier ID_{RN2} is connected to the RN 21 in the state illustrated in FIG. 12 is then described. FIG. 18 is a diagram illustrated to describe a state in which the RN 31 having the identifier ID_{RN2} is connected to the RN 21. In addition, FIG. 19 is a sequence diagram illustrating a message exchange procedure after establishment of a wireless link between the RN 21 and the RN 31.

The RN 31 transmits an RS message to the RN 21 (step S141). This message includes the ID_{RN2} that is an identifier of the RN 31.

The RN 21, when receiving the RS message from the RN 31, transmits a Registration message to the MME 13 (step S142). This Registration message includes the ID_{RN1} that is an identifier of the RN 21 and the ID_{RN2} that is an identifier of the RN 31.

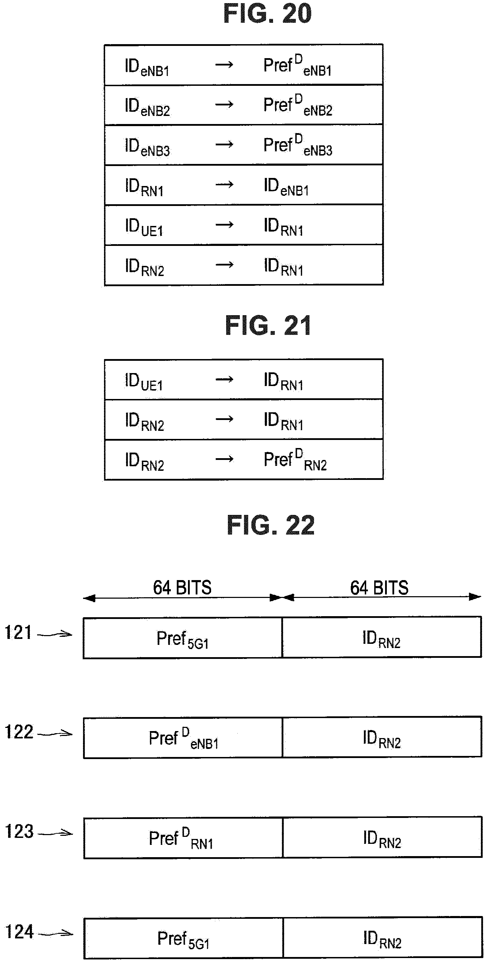

The MME 13, when receiving the Registration message transmitted from the RN 21, updates the contents of the held mapping table on the basis of the contents of the Registration message (step S143). FIG. 20 is a diagram illustrated to describe an example of the contents of the mapping table held by the MME 13. The MME 13 registers information indicating that the RN 31 having the identifier ID_{RN2} is connected to the RN 21 having the identifier ID_{RN1} in the mapping table on the basis of the Registration message transmitted from the RN 21 as in the sixth row of the mapping table.

The MME 13, when updating the mapping table, replies a Registration Ack message indicating that the mapping table is successfully updated to the RN 21 (step S144). The RN 21, when receiving the Registration Ack message from the MME 13, updates the mapping table held by the own node (step S145). FIG. 21 is a diagram illustrated to describe an example of the mapping table held by the RN 21. The second row of the mapping table illustrated in FIG. 21 indicates that the RN 31 is connected to the RN 21.

The RN 21, when updating the mapping table, replies an RA message to the RN 31 (step S146). This RA message includes the Pref^{D}_{RN1} that is an IPv6 prefix of the downstream interface of the RN 21 and the ID_{RN1} that is an identifier of the RN 21.

The RN 31, when receiving the RA message transmitted from the RN 21, generates an IP^{U}_{RN2} that is an IPv6 address of the own node, from the Pref^{D}_{RN1} that is an IPv6 prefix of the wireless interface of the RN 21 and the ID_{RN2} that is an identifier of the own node (step S147).

The packet transmission from the CN 3 that is a node connected to the Internet 2 to the RN 31 is then considered. It is assumed that the CN 3 knows the ID_{RN2} that is an identifier of the RN 31 and the IPv6 prefix Pref_{5G1} of the domain 10 to which the RN 31 is connected.

FIG. 22 is a diagram illustrated to describe transition of an end-point address of a packet transmitted from the CN 3 to the RN 31. The CN 3 generates an IPv6 address denoted by reference numeral 121 as an end-point address. The IPv6 address denoted by reference numeral 121 is obtained by adding the ID_{RN2} that is an identifier of the RN 31 to the IPv6 prefix Pref_{5G1}. As the start-point address, the IP_{CN1} that is an IPv6 address of the CN 3 is used. The router of the Internet 2 holds route information relating to the Pref_{5G1}. Thus, the packet transmitted from the CN 3 reaches the PGW 11.

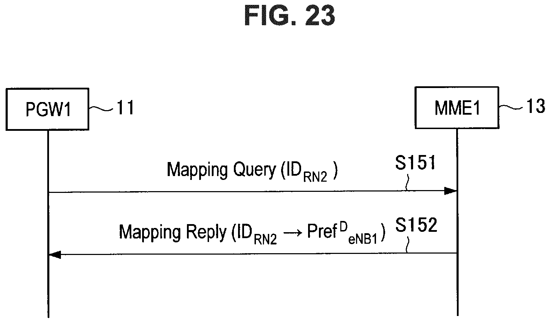

FIG. 23 is a sequence diagram illustrating an operation example of the PGW 11 and the MME 13. The PGW 11, when receiving the packet from the CN 3, inquires of the MME 13 the IPv6 prefix corresponding to the identifier ID_{RN2} (step S151). The MME 13 refers to the mapping table, and knows that the RN 31 corresponding to the identifier ID_{RN2} is connected to the RN (RN 21) having the identifier ID_{RN1}, knows that the RN 21 corresponding to the identifier ID_{RN1} is connected to the eNB (eNB 14a) having the identifier ID_{eNB1}, and further knows that the IPv6 prefix of the wireless interface of the eNB having the identifier ID_{eNB1} is the Pref^{D}_{eNB1}. Then, the MME 13 replies the reference result of the mapping table to the PGW 11 (step S152). The PGW 11 caches the information replied from the MME 13. The PGW 11, when receiving a packet having the same end-point address after that, the PGW 11 does not inquire of the MME 13 but uses cached information.

The PGW 11, when acquiring the information from the MME 13, replaces the end-point address as denoted by a reference numeral 122. In other words, the PGW 11 replaces the IPv6 prefix Pref_{5G1} with the Pref^{D}_{eNB1}. The packet replaced as denoted by 122 reaches the RN 21 by the IPv6 routing control inside the domain 10.

The RN 21, when receiving the packet, refers to the mapping table of the own node, and knows that the RN 31 corresponding to the identifier ID_{RN2} is connected to the own node. Then, the RN 21 replaces the end-point address as denoted by the reference numeral 123. In other words, the RN 21 replaces the IPv6 prefix Pref^{D}_{eNB1} with the Pref^{D}_{RN1}. The packet in which the end-point address is replaced as denoted by reference numeral 123 reaches the RN 31.

The network layer of the RN 31, when receiving the packet having the end-point address denoted by reference numeral 123, replaces the end-point address as denoted by reference numeral 124. In other words, the RN 31 replaces the IPv6 prefix Pref^{D}_{RN1} with the Pref_{5G1}. The RN 31, when replacing the end-point address, delivers the packet to the upper layer.

This series of packet replacing makes it appear that communication is being performed between the IPv6 address IP_{CN1} of the CN 3 and the IPv6 address denoted by reference numeral 121 from the viewpoint of the transport layers of the RN 31 and the CN 3 and higher layers.

The packet transmission from the RN 31 to the CN 3 is then considered. The application running on the RN 31 generates an IPv6 address denoted by reference numeral 124 as a start-point address. The IPv6 address denoted by reference numeral 124 is obtained by adding the ID_{RN2} that is an identifier of the RN 31 to the IPv6 prefix Pref_{5G1}. As an end-point address, the IP_{CN1} that is an IPv6 address of the CN 3 is used.

The network layer of the RN 31 translates the start-point address into the IPv6 address denoted by reference numeral 123. In other words, the RN 31 replaces the IPv6 prefix Pref_{5G1} with the Pref^{D}_{UE1}. The packet replaced as denoted by reference numeral 123 reaches the RN 21.

The RN 21 translates the start-point address into an IPv6 address denoted by reference numeral 122. In other words, the RN 21 replaces the IPv6 prefix Pref_{5G1} with the Pref^{D}_{eNB1}. The packet replaced as denoted by reference numeral 122 reaches the PGW 11 by the routing control inside the domain 10.

The PGW 11, when receiving the packet having the start-point address denoted by reference numeral 122, replaces the start-point address as denoted by a reference 121. In other words, the PGW 11 replaces the IPv6 prefix Pref^{D}_{eNB1} with the Pref_{5G1}. The PGW 11, when replacing the start-point address, transmits the replaced packet to the Internet 2. The packet reaches the CN 3 by the routing control of the Internet 2.

This series of packet replacing makes it appear that communication is being performed between the IPv6 address IP_{CN1} of the CN 3 and the IPv6 address denoted by reference numeral 124 from the viewpoint of the transport layers of the RN 31 and the CN 3 and higher layers.

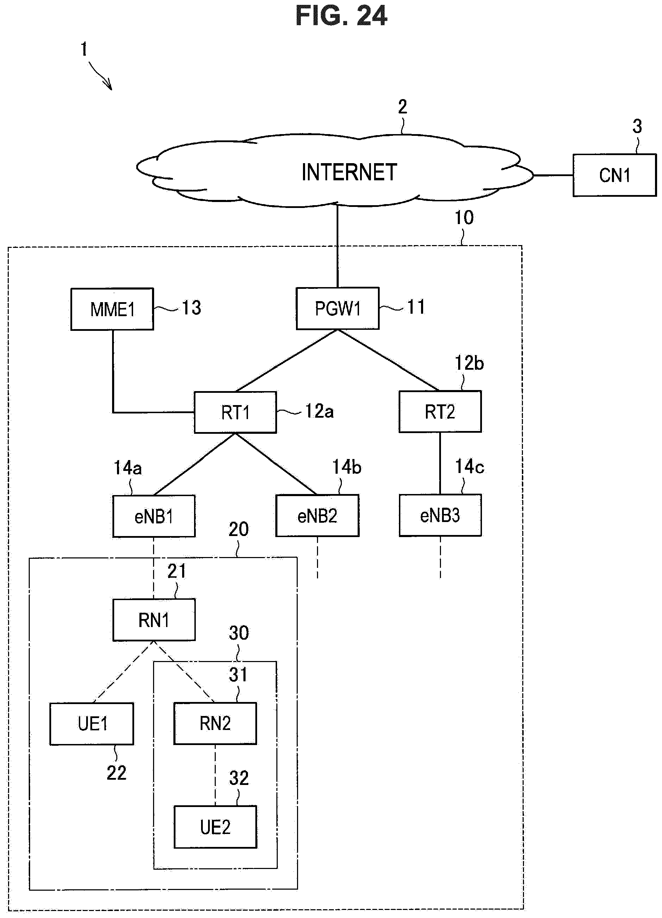

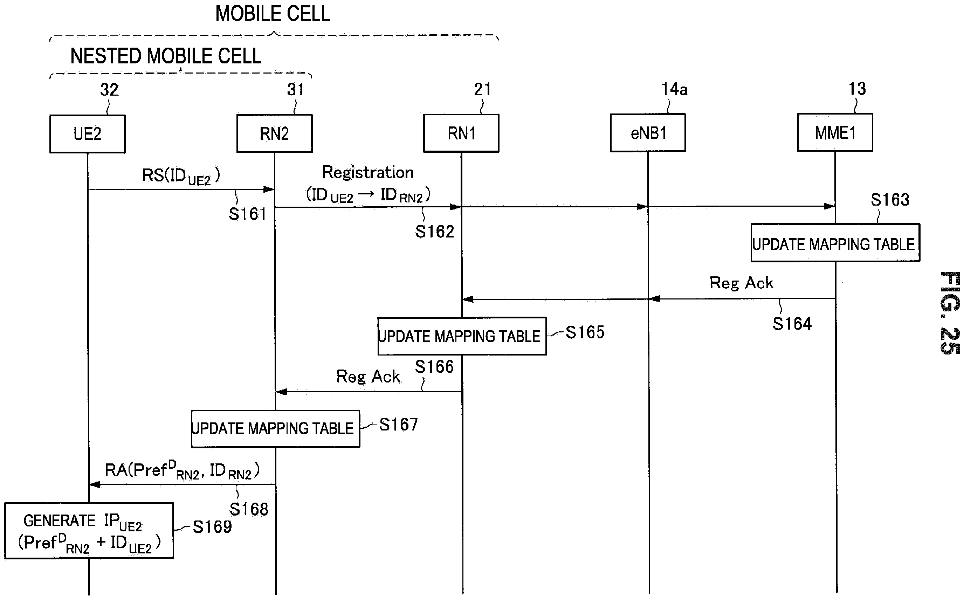

The operation in case the UE 32 having the identifier ID_{UE2} is connected to the RN 31 in the state illustrated in FIG. 18 is then described. FIG. 24 is a diagram illustrated to describe a state in which the UE 32 having the identifier ID_{UE2} is connected to the RN 31. In addition, FIG. 25 is a sequence diagram illustrating a message exchange procedure after establishment of a wireless link between the RN 31 and the UE 32.

The UE 32 transmits an RS message to the RN 31 (step S161). This message includes the ID_{UE2} that is an identifier of the UE 32.

The RN 31, when receiving the RS message from the UE 32, transmits a Registration message to the MME 13 (step S162). This Registration message includes the ID_{RN2} that is an identifier of the RN 31 and the ID_{UE2} that is an identifier of the UE 32. The Registration message reaches the MME 13 via the RN 21 and the eNB 14a.

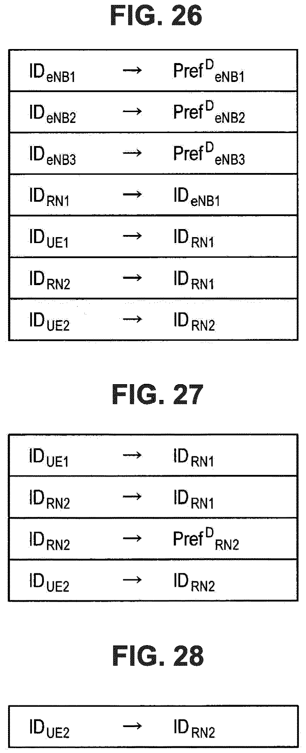

The MME 13, when receiving the Registration message transmitted from the RN 31, updates the contents of the held mapping table on the basis of the contents of the Registration message (step S163). FIG. 26 is a diagram illustrated to describe an example of the contents of the mapping table held by the MME 13. The MME 13 registers information indicating that the UE 32 having the identifier ID_{UE2} is connected to the RN 31 having the identifier ID_{RN2} in the mapping table on the basis of the Registration message transmitted from the RN 31 as shown in the seventh row of the mapping table.

The MME 13, when updating the mapping table, replies a Registration Ack message indicating that the mapping table is successfully updated to the RN 31 (step S164). The RN 21, when receiving the Registration Ack message from the MME 13, updates the mapping table held by the own node (step S165). FIG. 27 is a diagram illustrated to describe an example of the mapping table held by the RN 21. The fourth line of the mapping table illustrated in FIG. 27 indicates that the UE 32 is connected to the RN 31.

The RN 21, when updating the mapping table, replies an RA message to the RN 31 (step S166). The RN 31 updates the mapping table held by its own node (step S167). FIG. 28 is a diagram illustrated to describe an example of the mapping table held by the RN 31. The first row of the mapping table illustrated in FIG. 28 indicates that the UE 32 is connected to the RN 31.

The RN 31, when updating the mapping table, replies an RA message to the UE 32 (step S168). This RA message includes the Pref^{D}_{RN2} that is an IPv6 prefix of the downstream interface of the RN 31 and the ID_{RN2} that is an identifier of the RN 31.

The UE 32, when receiving the RA message transmitted from the RN 31, generates an IP_{UE2} that is an IPv6 address of the own node from the Pref^{D}_{RN2} that is an IPv6 prefix of the wireless interface of the RN 31 and the ID_{UE2} that is an identifier of the own node (step S169).

The packet transmission from the CN 3 that is a node connected to the Internet 2 to the UE 32 is then considered. It is assumed that the CN 3 knows the ID_{UE2} that is an identifier of the UE 32 and the IPv6 prefix Pref_{5G1} of the domain 10 to which the UE 32 is connected.

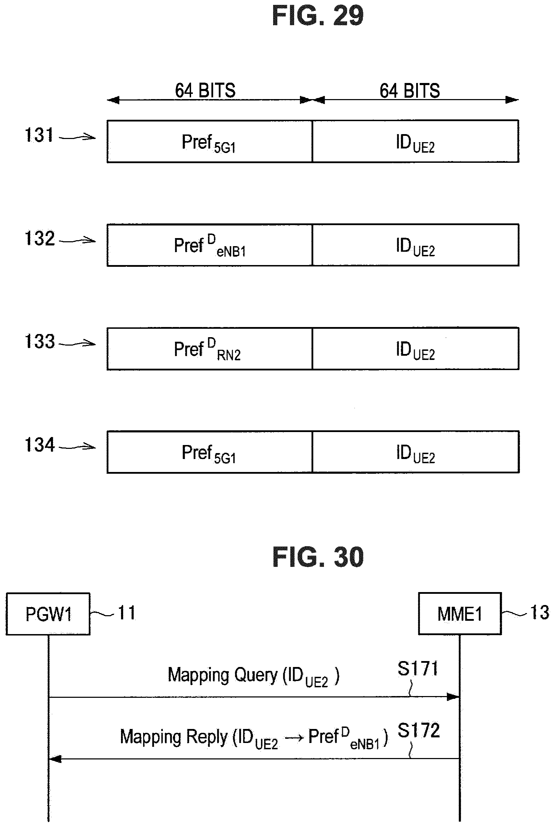

FIG. 29 is a diagram illustrated to describe transition of an end-point address of a packet transmitted from the CN 3 to the UE 32. The CN 3 generates an IPv6 address denoted by reference numeral 131 as an end-point address. The IPv6 address denoted by reference numeral 131 is obtained by adding the ID_{UE2} that is an identifier of the UE 32 to the IPv6 prefix Pref_{5G1}. As the start-point address, the IP_{CN1} that is an IPv6 address of the CN 3 is used. The router of the Internet 2 holds route information relating to the Pref_{5G1}. Thus, the packet transmitted from the CN 3 reaches the PGW 11.

FIG. 30 is a sequence diagram illustrating an operation example of the PGW 11 and the MME 13. The PGW 11, when receiving the packet from the CN 3, inquires of the MME 13 the IPv6 prefix corresponding to the identifier ID_{UE2} (step S171). The MME 13 refers to the mapping table to know that the UE 32 corresponding to the identifier ID_{UE2} is connected to the RN (RN 31) having the identifier ID_{RN2}. In addition, the MME 13 knows that the RN 31 corresponding to the identifier ID_{RN2} is connected to the RN (RN 21) having the identifier ID_{RN1}. In addition, the MME 13 also knows that the RN 21 corresponding to the identifier ID_{RN1} is connected to the eNB (eNB 14a) having the identifier ID_{eNB1}, and further knows that the IPv6 prefix of the wireless interface of the eNB having the identifier ID_{eNB1} is the Pref^{D}_{eNB1}. Then, the MME 13 replies the reference result of the mapping table to the PGW 11 (step S172). The PGW 11 caches the information replied from the MME 13. The PGW 11, when receiving a packet having the same end-point address after that, does not inquire of the MME 13 but uses cached information.

The PGW 11, when acquiring the information from the MME 13, replaces the end-point address as denoted by reference numeral 132. In other words, the PGW 11 replaces the IPv6 prefix Pref_{5G1} with the Pref^{D}_{eNB1}. The packet replaced as denoted by reference numeral 132 reaches the RN 21 by the IPv6 routing control inside the domain 10.

The RN 21, when receiving the packet, refers to the mapping table of its own node, and knows that the UE 32 corresponding to the identifier ID_{UE2} is connected to the RN (RN 31) having the identifier ID_{RN2} and knows that the RN 31 corresponding to the identifier ID_{RN2} is connected to its own node. Then, the RN 21 replaces the end-point address as denoted by reference numeral 133. In other words, the RN 21 replaces the IPv6 prefix Pref^{D}_{eNB1} with the Pref^{D}_{RN2}. The packet in which the end-point address is replaced as denoted by reference numeral 123 reaches the RN 31.

The RN 31, when receiving the packet transmitted from the RN 21, knows, from the mapping table of the own node, that the UE 32 corresponding to the identifier ID_{UE2} is connected to the own node, and relays the packet without any modification. This packet reaches the UE 32.

The network layer of the UE 32, when receiving the packet having the end-point address denoted by reference numeral 133, replaces the end-point address as denoted by reference numeral 134. In other words, the UE 32 replaces the IPv6 prefix Pref^{D}_{RN2} with the Pref_{5G1}. The UE 32, when replacing the end-point address, delivers the packet to the upper layer.

This series of packet replacing makes it appear that communication is being performed between the IPv6 address IP_{CN1} of the CN 3 and the IPv6 address denoted by reference numeral 131 from the viewpoint of the transport layers of the UE 32 and the CN 3 and higher layers.

The packet transmission from the UE 32 to the CN 3 is then considered. An application running on the UE 32 generates an IPv6 address denoted by reference numeral 134 as a start-point address. The IPv6 address denoted by reference numeral 134 is obtained by adding the ID_{UE2} that is an identifier of the UE 32 to the IPv6 prefix Pref_{5G1}. As an end-point address, the IP_{CN1} that is an IPv6 address of the CN 3 is used.

The network layer of the UE 32 translates the start-point address into the IPv6 address denoted by reference numeral 133. In other words, the UE 32 replaces the IPv6 prefix Pref_{5G1} with the Pref^{D}_{RN2}. The packet replaced as denoted by reference numeral 133 reaches the RN 21 via the RN 31.

The RN 21 translates the start-point address into the IPv6 address denoted by reference numeral 132. In other words, the RN 21 replaces the IPv6 prefix Pref_{5G1} with the Pref^{D}_{eNB1}. The packet replaced as indicated by reference numeral 132 reaches the PGW 11 by the routing control inside the domain 10.

The PGW 11, when receiving the packet having the start-point address denoted by reference numeral 132, replaces the start-point address as denoted by reference numeral 131. In other words, the PGW 11 replaces the IPv6 prefix Pref^{D}_{eNB1} with the Pref_{5G1}. The PGW 11, when replacing the start-point address, transmits the replaced packet to the Internet 2. The packet reaches the CN 3 by the routing control of the Internet 2.

This series of packet replacing makes it appear that communication is being performed between the IPv6 address IP_{CN1} of the CN 3 and the IPv6 address denoted by reference numeral 134 from the viewpoint of the transport layers of the UE 32 and the CN 3 and higher layers.

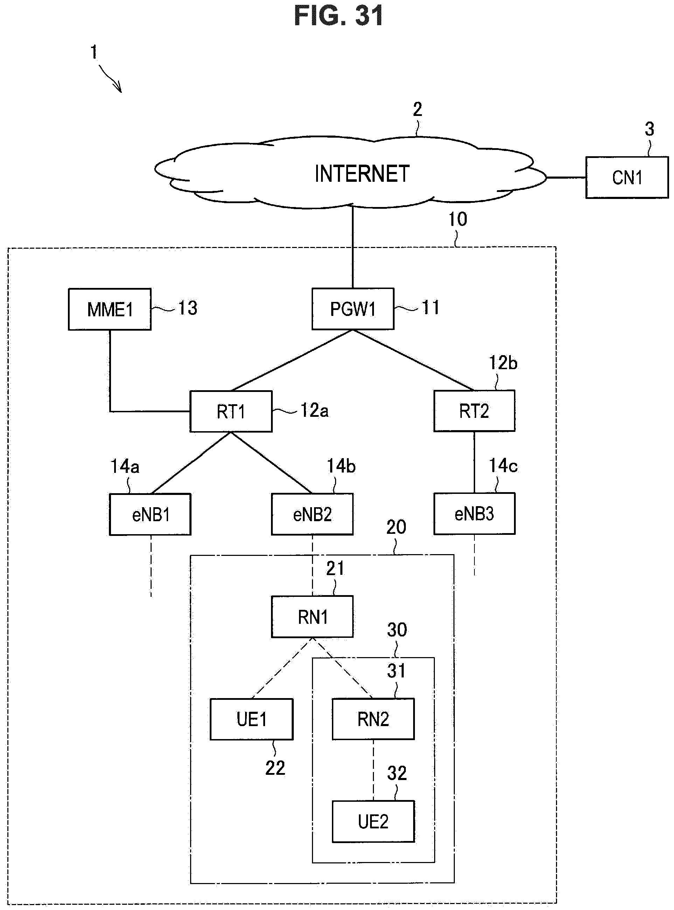

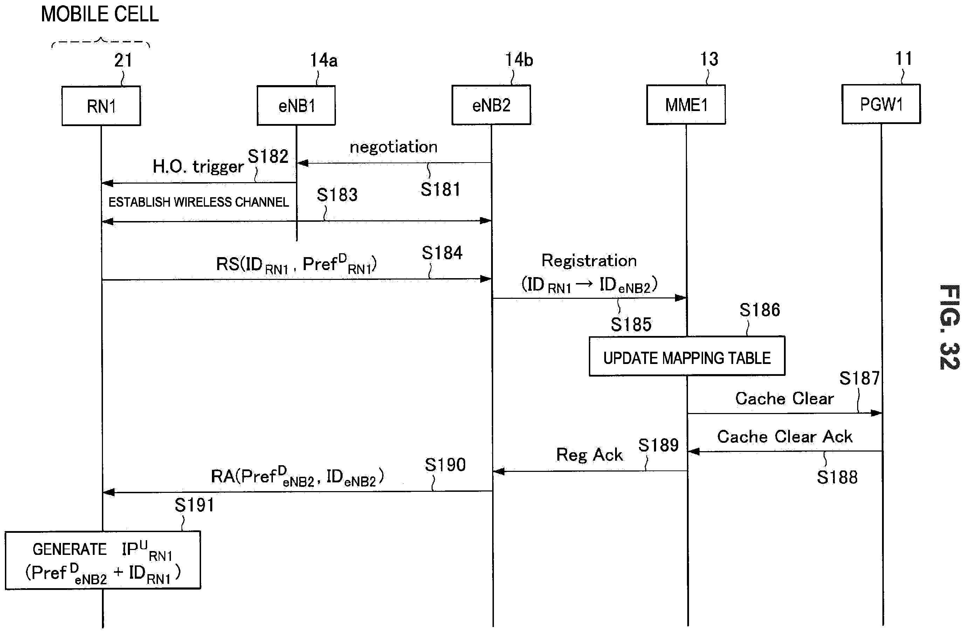

An operation when the RN 21 performs handover from the eNB 14a to the eNB 14b in the state illustrated in FIG. 24 is then described. FIG. 31 is a diagram illustrated to describe a state in which the RN 21 performs handover from the eNB 14a to the eNB 14b. In addition, FIG. 32 is a sequence diagram illustrating a message exchange procedure when the RN 21 performs handover from the eNB 14a to the eNB 14b.

When the RN 21 moves from the radio wave coverage of the eNB 14a to the radio wave coverage of the eNB 14b, the eNB 14a and the eNB 14b negotiate the handover of the RN 21 (step S181). Depending on a result of this negotiation, the RN 21 is determined to perform handover from the eNB 14a to the eNB 14b.

When the handover of the RN 21 is determined, the eNB 14a transmits a Handover Trigger message to the RN 21 and notifies that the eNB 14a performs handover to the eNB 14b (step S182).

The RN 21, when receiving the Handover Trigger message, establishes a wireless link with the eNB 14b (step S183).

The RN 21, when establishing the wireless link with the eNB 14b, transmits a Router Solicitation (RS) message to the eNB 14b (step S184). This message includes the ID_{RN1} that is an identifier of the RN 21 and the Pref^{D}_{RN1} that is an IPv6 prefix of the wireless interface of the RN 21.

The eNB 14b, when receiving the RS message transmitted from the RN 21, transmits a Registration message corresponding to the RS message to the MME 13 (step S185). This Registration message includes the ID_{RN1} that is an identifier of the RN 21 and the ID_{eNB2} that is an identifier of eNB 14b.

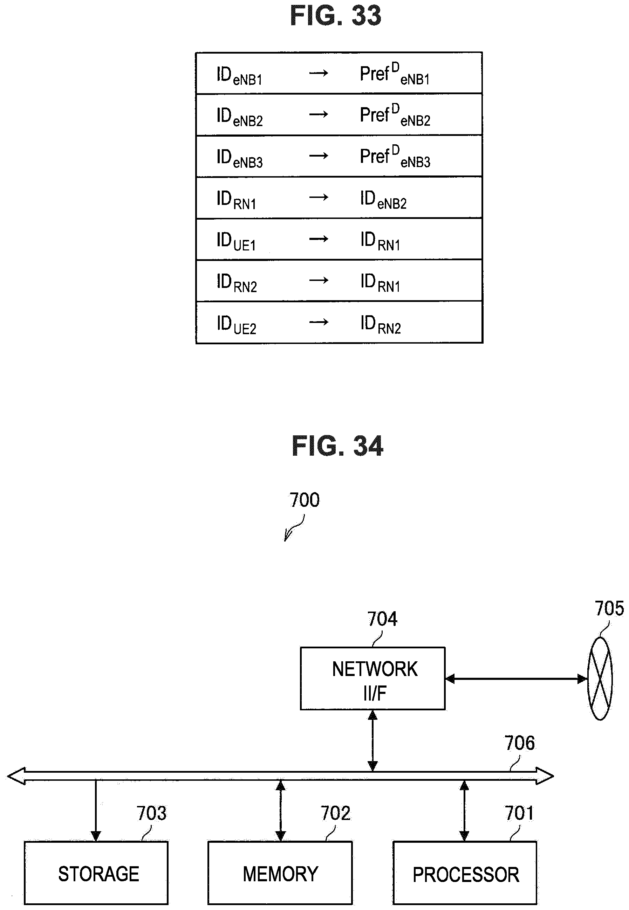

The MME 13, when receiving the Registration message transmitted from the eNB 14b, updates the contents of the held mapping table on the basis of the contents of the Registration message (step S186). FIG. 33 is a diagram illustrated to describe an example of the contents of the mapping table held by the MME 13. The MME 13 registers information indicating that the RN 21 having the identifier ID_{RN1} is connected to the eNB 14b having the identifier ID_{eNB2} in the mapping table on the basis of the Registration message transmitted from the eNB 14b as in the fourth row of the mapping table.

The MME 13, when updating the mapping table, transmits a Cache Clear message used to clear the cache to the PGW 11 (step S187). This Cache Clear message includes the ID_{RN1} that is an identifier of the RN 21.

The PGW 11, when receiving the Cache Clear message, clears the cache relating to the RN 21 and replies a Cache Clear ACK message back to the MME 13 (step S188).

The MME 13, when receiving the Cache Clear ACK message from the PGW 11, replies a Registration Ack message indicating that the mapping table is successfully updated to the eNB 14b (step S189). The eNB 14b, when receiving the Registration Ack message from the MME 13, replies an RA (Router Advertisement) message to the RN 21 (step S190). This RA message includes the Pref^{D}_{eNB2} that is an IPv6 prefix of the wireless interface of eNB 14b and the ID_{eNB2} that is an identifier of eNB 14b.

The RN 21, when receiving the RA message transmitted from the eNB 14b, generates an IP^{U}_{RN1} that is an IPv6 address of the own node from the Pref^{D}_{eNB2} that is an IPv6 prefix of the wireless interface of the eNB 14b and the ID_{RN1} that is an identifier of the own node (step S191).

### <3. Application examples>

The technology of the present disclosure is applicable to various products. For example, the PGW 11 and the MME 13 may be realized as a server of any type such as a tower server, a rack server, a blade server, or the like. In addition, at least a part of constituent elements of the PGW 11 and the MME 13 may be realized in a module mounted in a server (e.g., an integrated circuit module configured in one die or a card or a blade inserted into a slot of a blade server).

In addition, the RNs 21 and 31, and the UEs 22 and 32 may be realized as, for example, a mobile terminal such as a smartphone, a tablet personal computer (PC), a notebook PC, a portable game terminal, a portable/dongle type mobile router, or a digital camera, or an in-vehicle terminal such as a car navigation device. In addition, the UE1 or the URN2 may be realized as a terminal that performs machine-to-machine (M2M) communication (also referred to as a machine type communication (MTC) terminal). Furthermore, at least a part of the constituent elements of the RNs 21 and 31, and the UEs 22 and 32 may be realized in a module mounted in such a terminal (for example, an integrated circuit module configured in one die).

### <3.1. Application example with regard to communication control device>

FIG. 34 is a block diagram illustrating an example of a schematic configuration of a server 700 to which the technology of the present disclosure may be applied. The server 700 includes a processor 701, a memory 702, a storage 703, a network interface 704, and a bus 706.

The processor 701 may be, for example, a central processing unit (CPU) or a digital signal processor (DSP) and controls various functions of the server 700. The memory 702 includes a random access memory (RAM) and a read only memory (ROM) and stores programs executed by the processor 701 and data. The storage 703 can include a storage medium such as a semiconductor memory or a hard disk.

The network interface 704 is a wired communication interface for connecting the server 700 to a wired communication network 705. The wired communication network 705 may be a core network such as an evolved packet core (EPC) or a packet data network (PDN) such as the Internet.

The bus 706 connects the processor 701, the memory 702, the storage 703, and the network interface 704 to each other. The bus 706 may include two or more buses that operate at different speeds (e.g., a high-speed bus and a low-speed bus).

In the server 700 illustrated in FIG. 34, one or more constituent elements included in the PGW 11 described with reference to FIG. 2 and the MME 13 described with reference to FIG. 3 (the communication control unit 1131 and the communication control unit 1331, for example) may be implemented by the processor 701. As an example, a program for causing a processor to function as the one or more constituent elements (i.e., a program for causing a processor to execute operations of the one or more constituent elements) may be installed in the server 700 and the processor 701 may execute the program. As another example, a module including the processor 701 and the memory 702 may be mounted in the server 700 and the one or more constituent elements may be implemented by the module. In this case, the module may store a program for causing a processor to function as the one or more constituent elements in the memory 702 and the program may be executed by the processor 701. The server 700 or the module may be provided as devices having the above-described one or more constituent elements as described above, or the program for causing a processor to function as the one or more constituent elements may be provided. In addition, a readable recording medium in which the program is recorded may be provided.

In addition, in the server 700 shown in FIG. 34, the network communication unit 1110 described with reference FIG. 2 and the network communication unit 1310 described with reference FIG. 3, for example, may be implemented by the network interface 704. Moreover, the storage unit 1120 and the storage unit 1320 may be implemented by the memory 702 and/or the storage 703.

### <3.2. Application example with regard to terminal device and the relay device>

### (First application example)

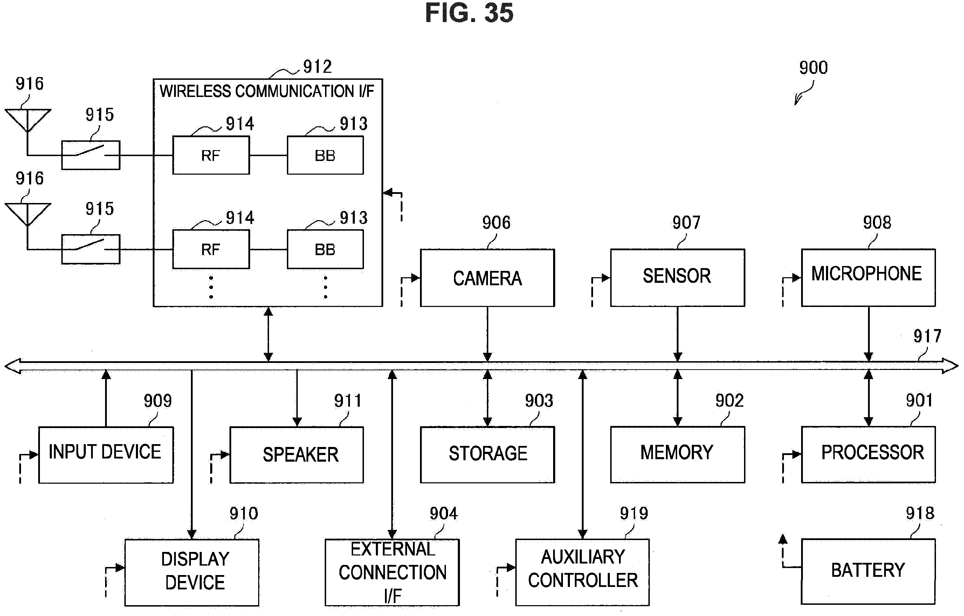

FIG. 35 is a block diagram illustrating an example of a schematic configuration of a smartphone 900 to which the technology of the present disclosure may be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes RAM and ROM, and stores a program that is executed by the processor 901, and data. The storage 903 may include a storage medium such as a semiconductor memory and a hard disk. The external connection interface 904 is an interface for connecting an external device such as a memory card and a universal serial bus (USB) device to the smartphone 900.

The camera 906 includes an image sensor such as a charge-coupled device (CCD) and a complementary metal oxide semiconductor (CMOS), and generates a captured image. The sensor 907 may include a group of sensors such as a measurement sensor, a gyro sensor, a geomagnetic sensor, and an acceleration sensor. The microphone 908 converts sounds that are input to the smartphone 900 to audio signals. The input device 909 includes, for example, a touch sensor configured to detect touch onto a screen of the display device 910, a keypad, a keyboard, a button, or a switch, and receives an operation or an information input from a user. The display device 910 includes a screen such as a liquid crystal display (LCD) and an organic light-emitting diode (OLED) display, and displays an output image of the smartphone 900. The speaker 911 converts audio signals that are output from the smartphone 900 to sounds.

The wireless communication interface 912 supports any cellular communication scheme such as LTE and LTE-Advanced, and performs wireless communication. The wireless communication interface 912 may typically include, for example, a BB processor 913 and an RF circuit 914. The BB processor 913 may perform, for example, encoding/decoding, modulating/demodulating, and multiplexing/demultiplexing, and performs various types of signal processing for wireless communication. Meanwhile, the RF circuit 914 may include, for example, a mixer, a filter, and an amplifier, and transmits and receives radio signals via the antenna 916. The wireless communication interface 912 may also be a one-chip module that has the BB processor 913 and the RF circuit 914 integrated thereon. The wireless communication interface 912 may include the multiple BB processors 913 and the multiple RF circuits 914, as illustrated in FIG. 35. Although FIG. 35 illustrates the example in which the wireless communication interface 912 includes the multiple BB processors 913 and the multiple RF circuits 914, the wireless communication interface 912 may also include a single BB processor 913 or a single RF circuit 914.

Furthermore, in addition to a cellular communication scheme, the wireless communication interface 912 may support another type of wireless communication scheme such as a short-distance wireless communication scheme, a near field communication scheme, and a wireless local area network (LAN) scheme. In that case, the wireless communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the wireless communication interface 912.

Each of the antennas 916 includes a single or multiple antenna elements (such as multiple antenna elements included in an MIMO antenna), and is used for the wireless communication interface 912 to transmit and receive radio signals. The smartphone 900 may include the multiple antennas 916, as illustrated in FIG. 35. Although FIG. 35 illustrates the example in which the smartphone 900 includes the multiple antennas 916, the smartphone 900 may also include a single antenna 916.

Furthermore, the smartphone 900 may include the antenna 916 for each wireless communication scheme. In that case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to blocks of the smartphone 900 illustrated in FIG. 35 via feeder lines, which are partially shown as dashed lines in the figure. The auxiliary controller 919 operates a minimum necessary function of the smartphone 900, for example, in a sleep mode.

In the smartphone 900 shown in FIG. 35, one or more constituent elements included in the RN 21 described with reference to FIG. 4 (the relay unit 241 or the communication control unit 243) may be implemented by the wireless communication interface 912. Alternatively, at least some of these constituent elements may be implemented by the processor 901 or the auxiliary controller 919. As an example, a module which includes a part (for example, the BB processor 913) or all of the wireless communication interface 912, the processor 901 and/or the auxiliary controller 919 may be mounted in the smartphone 900, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the smartphone 900, and the wireless communication interface 912 (for example, the BB processor 913), the processor 901 and/or the auxiliary controller 919 may execute the program. As described above, the smartphone 900 or the module may be provided as a device which includes the one or more constituent elements, and the program for causing the processor to function as the one or more constituent elements may be provided. In addition, a readable recording medium in which the program is recorded may be provided.

In addition, in the smartphone 900 shown in FIG. 35, the wireless communication unit 220 described with reference to FIG. 4, for example, may be implemented by the wireless communication interface 912 (for example, the RF circuit 914). Moreover, the antenna unit 210 may be implemented by the antenna 916. Moreover, the storage unit 230 may be implemented by the memory 902.

### (Second application example)

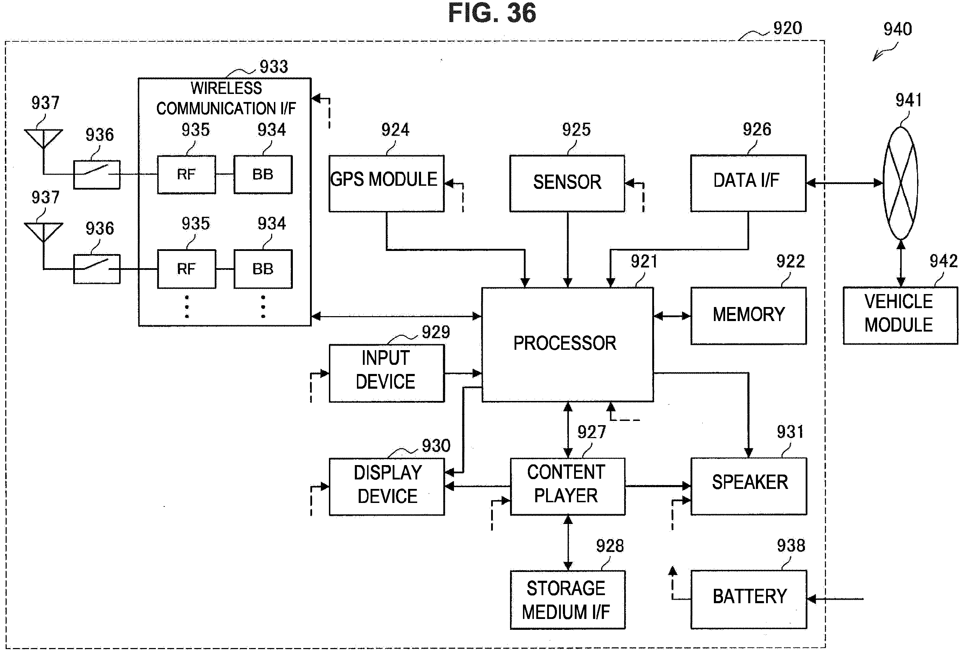

FIG. 36 is a block diagram illustrating an example of a schematic configuration of a car navigation device 920 to which the technology of the present disclosure may be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or a SoC, and controls a navigation function and another function of the car navigation device 920. The memory 922 includes RAM and ROM, and stores a program that is executed by the processor 921, and data.

The GPS module 924 uses GPS signals received from a GPS satellite to measure a position (such as latitude, longitude, and altitude) of the car navigation device 920. The sensor 925 may include a group of sensors such as a gyro sensor, a geomagnetic sensor, and a barometric sensor. The data interface 926 is connected to, for example, an in-vehicle network 941 via a terminal that is not shown, and acquires data generated by the vehicle, such as vehicle speed data.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or an information input from a user. The display device 930 includes a screen such as an LCD or an OLED display, and displays an image of the navigation function or content that is reproduced. The speaker 931 outputs sounds of the navigation function or the content that is reproduced.

The wireless communication interface 933 supports any cellular communication scheme such as LET and LTE-Advanced, and performs wireless communication. The wireless communication interface 933 may typically include, for example, a BB processor 934 and an RF circuit 935. The BB processor 934 may perform, for example, encoding/decoding, modulating/demodulating, and multiplexing/demultiplexing, and performs various types of signal processing for wireless communication. Meanwhile, the RF circuit 935 may include, for example, a mixer, a filter, and an amplifier, and transmits and receives radio signals via the antenna 937. The wireless communication interface 933 may be a one-chip module having the BB processor 934 and the RF circuit 935 integrated thereon. The wireless communication interface 933 may include the multiple BB processors 934 and the multiple RF circuits 935, as illustrated in FIG. 36. Although FIG. 36 illustrates the example in which the wireless communication interface 933 includes the multiple BB processors 934 and the multiple RF circuits 935, the wireless communication interface 933 may also include a single BB processor 934 or a single RF circuit 935.

Furthermore, in addition to a cellular communication scheme, the wireless communication interface 933 may support another type of wireless communication scheme such as a short-distance wireless communication scheme, a near field communication scheme, and a wireless LAN scheme. In that case, the wireless communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the wireless communication interface 933.

Each of the antennas 937 includes a single or multiple antenna elements (such as multiple antenna elements included in an MIMO antenna), and is used for the wireless communication interface 933 to transmit and receive radio signals. The car navigation device 920 may include the multiple antennas 937, as illustrated in FIG. 36. Although FIG. 36 illustrates the example in which the car navigation device 920 includes the multiple antennas 937, the car navigation device 920 may also include a single antenna 937.

Furthermore, the car navigation device 920 may include the antenna 937 for each wireless communication scheme. In that case, the antenna switches 936 may be omitted from the configuration of the car navigation device 920.

The battery 938 supplies power to blocks of the car navigation device 920 illustrated in FIG. 36 via feeder lines that are partially shown as dashed lines in the figure. The battery 938 accumulates power supplied from the vehicle.

In the car navigation device 920 shown in FIG. 36, one or more constituent elements included in the RN 21 described with reference to FIG. 4 (the relay unit 241 and/or the communication control unit 243) may be implemented by the wireless communication interface 933. Alternatively, at least some of these constituent elements may be implemented by the processor 921. As an example, a module which includes a part (for example, the BB processor 934) or all of the wireless communication interface 933 and/or the processor 921 may be mounted in the car navigation device 920, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the car navigation device 920, and the wireless communication interface 933 (for example, the BB processor 934) and/or the processor 921 may execute the program. As described above, the car navigation device 920 or the module may be provided as a device which includes the one or more constituent elements, and the program for causing the processor to function as the one or more constituent elements may be provided. In addition, a readable recording medium in which the program is recorded may be provided.

In addition, in the car navigation device 920 shown in FIG. 36, the wireless communication unit 220 described with reference to FIG. 4, for example, may be implemented by the wireless communication interface 933 (for example, the RF circuit 935). Moreover, the antenna unit 210 may be implemented by the antenna 937. Moreover, the storage unit 230 may be implemented by the memory 922.

The technology of the present disclosure may also be realized as an in-vehicle system (or a vehicle) 940 including one or more blocks of the car navigation device 920, the in-vehicle network 941, and a vehicle module 942. In other words, the in-vehicle system (or a vehicle) 940 may be provided as a device that includes the relay unit 241 and the communication control unit 243. The vehicle module 942 generates vehicle data such as vehicle speed, engine speed, and trouble information, and outputs the generated data to the in-vehicle network 941.

### <3. Concluding remarks>

As described above, according to the embodiment of the present disclosure, the PGW 11, the MME 13, the RNs 21 and 31, and the UE 22 and 32 supporting a relay node assumed to move are provided.

The PGW 11 according to the embodiment of the present disclosure is capable of relaying a packet sent to the RN 21 or a device (relay node or UE) connected to the RN 21 by replacing the end-point address of the packet reached from the device of the Internet 2. In addition, the PGW 11 according to the embodiment of the present disclosure is capable of relaying the packet sent to the device of the Internet 2 by replacing the start-point address of the packet sent from the inside of the domain 10.

The RNs 21 and 31 or the UEs 22 and 32 according to the embodiment of the present disclosure is capable of communicating with the devices of the Internet 2 from the viewpoint of the transport layer or higher layer by replacing the end-point address of the packet reached from the Internet 2.

The MME 13 is capable of causing the PGW 11, the RN 21, or the like to replace a packet by holding the connection state between devices inside the domain 10 and the identifier information of each device.

The PGW 11, the MME 13, the RNs 21 and 31, and the UEs 22 and 32 according to the present embodiment are capable of supporting a relay node assumed to move by replacing the end-point address or the start-point address. In addition, in the present embodiment, the end-point address or the start-point address is replaced to relay the packet, so there is no need for tunneling and there is no header overhead. In addition, in the present embodiment, the amount of route information of the core network does not depend on the number of UEs connected in the mobile cell or the number of nested RNs.

The respective steps in the processing executed by each apparatus in this specification are not necessarily processed in chronological order in accordance with the sequences listed in the sequence diagrams or flowcharts. In one example, the respective steps in the process executed by each apparatus may be processed in an order different from the sequences listed in the flowcharts, or may be processed in parallel.

Further, it is also possible to create a computer program for causing the hardware such as CPU, ROM, and RAM incorporated in each apparatus to implement functions equivalent to those of components of each apparatus described above. In addition, it is possible to provide a storage medium having the relevant computer program stored therein. In addition, each functional block shown in the functional block diagrams can be implemented by hardware that allows a series of processing operations to be performed by hardware.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

In one example, although the upper 64 bits of the IPv6 address are used as a prefix in the embodiment described above, the present disclosure is not limited to such an example. In one example, a prefix may be assigned to each slice. As an example, an approach to use the upper 60 bits of the IPv6 address as a base prefix to indicate a slice with 4 bits may be employed.

Further, in one example, in the embodiment described above, although the eNBs 14a to 14c are provided inside the domain 10 and the eNBs 14a to 14c are connected to the RTs 12a and 12b, the eNBs 14a to 14c may be directly connected to the Internet 2. In a case where the eNBs 14a to 14c are directly connected to the Internet 2, the eNBs 14a to 14c execute the packet replacing processing instead of the PGW 11.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 1: network system
- 2: Internet
- 10: domain
- 11: PGW
- 12a, 12b: router (RT)
- 13: MME
- 14a, 14b, 14c: eNB
- 20: mobile cell
- 21: RN
- 22: UE
- 30: nested mobile cell
- 31: RN
- 32: UE

## Claims

1. A wireless communication device implemented as a user equipment or a relay node (21, 22, 31, 32) of a domain (10), comprising:
a processing unit (240) configured to perform communication processing using a network layer IP address in which a routing identifier determined for the domain (10) is set to upper bits and an identifier uniquely assigned to each device is set to lower bits,
wherein the processing unit (240) is further configured to replace, when receiving a packet from an Internet network (2) via a packet data network gateway, PGW, in which lower bits of an end-point address are equal to an identifier of the wireless communication device, upper bits of the end-point address with said routing identifier determined for the domain (10).

2. The wireless communication device according to claim 1,
wherein the processing unit (240) is configured to, upon transmitting a packet, with regard to an upper bit of a start-point address, replace the routing identifier with a prefix portion corresponding to a device connected to an upstream side of the wireless communication device.

3. The wireless communication device according to claims 1 or 2,
wherein the processing unit (240) is configured to, when receiving a trigger for handover form a first base station (14a) of the domain (10) to a second base station (14b) of the domain (10), transmit a predetermined message to the second base station (14b).

4. The wireless communication device according to claim 3, wherein the predetermined message includes an identifier and a prefix portion assigned to the wireless communication device (21, 22, 31, 32).

5. The wireless communication device according to any one of claims 1 to 4,
wherein the upper bits are at maximum 64 bits and/or the lower bits are at maximum 64 bits.

6. A relay device (11) of a domain (10) implemented as packet data network gateway, PGW, between the domain (10) and an Internet network (2), comprising:
a communication unit (1110) configured to receive a packet addressed to a network layer IP address including predetermined upper bits and predetermined lower bits; and
a processing unit (1130) configured to
acquire a prefix portion corresponding to the lower bits to replace the upper bits with the prefix portion for the network layer IP address as a destination of a packet received from the Internet network (2) and addressed to a wireless communication device of the domain (10), and
acquire the prefix portion to replace the upper bits with a routing identifier determined for the domain (10) for the network layer IP address as a start-point address of a packet received from the domain (10) and addressed to the Internet network (2).

7. The relay device according to claim 6,
wherein the processing unit (1130) is configured to, when replacing the upper bits to the prefix portion, cache information relating to the prefix portion.

8. The relay device according to claim 7,
wherein the processing unit (1130) is configured to replace the upper bits with the prefix portion using the cached information in a case where the communication unit (1110) receives a packet addressed to the same as the network layer IP address.

9. The relay device according to any one of claim 6 to 8,
wherein the upper bits are at maximum 64 bits and/or the lower bits are at maximum 64 bits.

10. A wireless communication method for a wireless communication device implemented as a user equipment or a relay node (21, 22, 31, 32) of a domain (10), comprising:
performing, by a processing unit (240), communication processing using a network layer IP address in which a routing identifier determined for the domain (10) is set to upper bits and an identifier uniquely assigned to each device is set to lower bits,
wherein the processing unit (240), when receiving a packet from an Internet network (2) via a packet data network gateway, PGW, in which lower bits of an end-point address are equal to an identifier of the wireless communication device, replaces upper bits of the end-point address with said routing identifier determined for the domain (10).

11. A relay method for a relay device (11) of a domain (10) implemented as packet data network gateway, PGW, between the domain an Internet network (2), comprising:
receiving, by a communication unit (1110), a packet addressed to a network layer IP address including predetermined upper bits and predetermined lower bits; and
acquiring, by a processing unit (1130), a prefix portion corresponding to the lower bits to replace the upper bits with the prefix portion for the network layer IP address as a destination of a packet received from the Internet network (2) and addressed to a wireless communication device of the domain (10), and
acquiring, by the processing unit (1130), the prefix portion to replace the upper bits with a routing identifier determined for the domain (10) for the network layer IP address as a start-point address of a packet received from the domain and addressed to the Internet network (2).

## Patentansprüche

1. Drahtloskommunikationsvorrichtung, umgesetzt als ein Nutzerendgerät oder als ein Relaisknoten (21, 22, 31, 32) eines Bereichs (10), umfassend:
eine Verarbeitungseinheit (240), ausgelegt zum Durchführen einer Kommunikationsverarbeitung unter Verwendung einer Netzwerkschicht-IP-Adresse, bei der eine für den Bereich (10) bestimmte Routingkennung auf obere Bits gesetzt ist und eine jeder Vorrichtung eindeutig zugewiesene Kennung auf untere Bits gesetzt ist,
wobei die Verarbeitungseinheit (240) weiter ausgelegt ist zum Ersetzen, bei Empfang eines Pakets von einem Internet-Netzwerk (2) über ein Paketdatennetzwerk-Gateway, PGW, in dem untere Bits einer Endpunktadresse gleich einer Kennung der Drahtloskommunikationsvorrichtung sind, von oberen Bits der Endpunktadresse mit der für den Bereich (10) bestimmten Routingkennung.

2. Drahtloskommunikationsvorrichtung nach Anspruch 1, wobei die Verarbeitungseinheit (240) ausgelegt ist, um beim Senden eines Pakets bezüglich eines oberen Bit einer Startpunktadresse die Routingkennung mit einem Präfixabschnitt zu ersetzen entsprechend einer Vorrichtung, die an eine vorgeschaltete Seite der Drahtloskommunikationseinrichtung angeschlossen ist.

3. Drahtloskommunikationsvorrichtung nach Ansprüchen 1 oder 2,
wobei die Verarbeitungseinheit (240) ausgelegt ist, um beim Empfang eines Auslösers für ein Handover von einer ersten Basisstation (14a) des Bereichs (10) zu einer zweiten Basisstation (14b) des Bereichs (10) eine vorbestimmte Nachricht an die zweite Basisstation (14b) zu senden.

4. Drahtloskommunikationsvorrichtung nach Anspruch 3, wobei die vorbestimmte Nachricht eine Kennung und einen der Drahtloskommunikationsvorrichtung (21, 22, 31, 32) zugewiesenen Präfixabschnitt enthält.

5. Drahtloskommunikationsvorrichtung nach einem der Ansprüche 1 bis 4,
wobei die oberen Bits auf maximal 64 Bits sind und/oder die unteren Bits auf maximal 64 Bits sind.

6. Relaisvorrichtung (11) eines Bereichs (10), umgesetzt als ein Paketdatennetzwerk-Gateway, PGW, zwischen dem Bereich (10) und einem Internet-Netzwerk (2), umfassend:
eine Kommunikationseinheit (1110), ausgelegt zum Empfangen eines Pakets adressiert an eine Netzwerkschicht-IP-Adresse einschließlich vorbestimmter oberer Bits und vorbestimmter unterer Bits; und
eine Verarbeitungseinheit (1130), ausgelegt zum
Erfassen eines Präfixabschnitts entsprechend den unteren Bits zum Ersetzen der oberen Bits mit dem Präfixabschnitt für die Netzwerkschicht-IP-Adresse als eine Destination eines von dem Internet-Netzwerk (2) empfangenen und an eine Drahtloskommunikationsvorrichtung des Bereichs (10) adressierten Pakets, und
Erfassen des Präfixabschnitts zum Ersetzen der oberen Bits mit einer Routingkennung bestimmt für den Bereich (10) für die Netzwerkschicht-IP-Adresse als eine Startpunktadresse eines von dem Bereich (10) empfangenen und an das Internet-Netzwerk (2) adressierten Pakets.

7. Relaisvorrichtung nach Anspruch 6,
wobei die Verarbeitungseinheit (1130) ausgelegt ist, um beim Ersetzen der oberen Bits zu dem Präfixabschnitt Informationen bezüglich des Präfixabschnitts zwischenzuspeichern.

8. Relaisvorrichtung nach Anspruch 7,
wobei die Verarbeitungseinheit (1130) ausgelegt ist zum Ersetzen der oberen Bits mit dem Präfixabschnitt unter Verwendung der zwischengespeicherten Informationen in einem Fall, wo die Kommunikationseinheit (1110) ein an die gleiche wie die Netzwerkschicht-IP-Adresse adressiertes Paket empfängt.

9. Relaisvorrichtung nach einem der Ansprüche 6 bis 8,
wobei die oberen Bits auf maximal 64 Bits sind und/oder die unteren Bits auf maximal 64 Bits sind.

10. Drahtloskommunikationsverfahren für eine Drahtloskommunikationsvorrichtung, umgesetzt als ein Nutzerendgerät oder ein Relaisknoten (21, 22, 31, 32) eines Bereichs (10), umfassend:
Durchführen, durch eine Verarbeitungseinheit (240), einer Kommunikationsverarbeitung unter Verwendung einer Netzwerkschicht-IP-Adresse, bei der eine für den Bereich (10) bestimmte Routingkennung auf obere Bits gesetzt ist und eine jeder Vorrichtung eindeutig zugeordnete Kennung auf untere Bits gesetzt ist,
wobei die Verarbeitungseinheit (240) beim Empfangen eines Pakets von einem Internet-Netzwerk (2) über ein Paketdatennetzwerk-Gateway, PGW, in dem untere Bits einer Endpunktadresse gleich einer Kennung der Drahtloskommunikationseinrichtung sind, obere Bits der Endpunktadresse mit der für den Bereich (10) bestimmten Routingkennung ersetzt.

11. Relaisverfahren für eine Relaisvorrichtung (11) eines Bereichs (10), umgesetzt als ein Paketdatennetzwerk-Gateway, PGW, zwischen dem Bereich ein Internet-Netzwerk (2), umfassend:
Empfangen, durch eine Kommunikationseinheit (1110), eines Pakets adressiert an eine Netzwerkschicht-IP-Adresse einschließlich vorbestimmter oberer Bits und vorbestimmter unterer Bits; und
Erfassen, durch eine Verarbeitungseinheit (1130), eines Präfixabschnitts entsprechend den unteren Bits zum Ersetzen der oberen Bits mit dem Präfixabschnitt für die Netzwerkschicht-IP-Adresse als eine Destination eines von dem Internet-Netzwerk (2) empfangenen und an eine Drahtloskommunikationseinrichtung des Bereichs (10) adressierten Pakets, und
Erfassen, durch die Verarbeitungseinheit (1130), des Präfixabschnitts zum Ersetzen der oberen Bits mit einer Routingkennung bestimmt für den Bereich (10) für die Netzwerkschicht-IP-Adresse als eine Startpunktadresse eines von dem Bereich empfangenen und an das Internet-Netzwerk (2) adressierten Pakets.

## Revendications

1. Dispositif de communication sans fil mis en œuvre sous forme d'un équipement utilisateur ou d'un nœud de relais (21, 22, 31, 32) d'un domaine (10), comprenant :
une unité de traitement (240) configurée pour réaliser un traitement de communication à l'aide d'une adresse IP de couche réseau dans laquelle un identifiant de routage déterminé pour le domaine (10) est défini sur des bits de poids fort et un identifiant assigné de manière unique à chaque dispositif est défini sur des bits de poids faible,
l'unité de traitement (240) étant configurée en outre pour remplacer, lors de la réception d'un paquet depuis un réseau Internet (2) via une passerelle de réseau de données par paquets, PGW, dans lequel des bits de poids faible d'une adresse de point terminal sont égaux à un identifiant du dispositif de communication sans fil, des bits de poids fort de l'adresse de point terminal par ledit identifiant de routage déterminé pour le domaine (10).

2. Dispositif de communication sans fil selon la revendication 1,
dans lequel l'unité de traitement (240) est configurée pour, lors de la transmission d'un paquet, au regard d'un bit de poids fort d'une adresse de point d'origine, remplacer l'identifiant de routage par une partie préfixe correspondant à un dispositif connecté à un côté amont du dispositif de communication sans fil.

3. Dispositif de communication sans fil selon les revendications 1 ou 2,
dans lequel l'unité de traitement (240) est configurée pour, lors de la réception d'un déclencheur de transfert depuis une première station de base (14a) du domaine (10) vers une deuxième station de base (14b) du domaine (10), transmettre un message prédéterminé à la deuxième station de base (14b).

4. Dispositif de communication sans fil selon la revendication 3, dans lequel le message prédéterminé comporte un identifiant et une partie préfixe assignés au dispositif de communication sans fil (21, 22, 31, 32).

5. Dispositif de communication sans fil selon l'une quelconque des revendications 1 à 4,
dans lequel les bits de poids fort représentent au plus 64 bits et/ou les bits de poids faible représentent au plus 64 bits.

6. Dispositif de relais (11) d'un domaine (10) mis en œuvre sous forme d'une passerelle de réseau de données par paquets, PGW, entre le domaine (10) et un réseau Internet (2), comprenant :
une unité de communication (1110) configurée pour recevoir un paquet adressé à une adresse IP de couche réseau comportant des bits de poids fort prédéterminés et des bits de poids faible prédéterminés ; et
une unité de traitement (1130) configurée pour
acquérir une partie préfixe correspondant aux bits de poids faible pour remplacer les bits de poids fort par la partie préfixe pour l'adresse IP de couche réseau en tant que destination d'un paquet reçu depuis le réseau Internet (2) et adressé à un dispositif de communication sans fil du domaine (10), et
acquérir la partie préfixe pour remplacer les bits de poids fort par un identifiant de routage déterminé pour le domaine (10) pour l'adresse IP de couche réseau en tant qu'adresse de point d'origine d'un paquet reçu depuis le domaine (10) et adressé au réseau Internet (2).

7. Dispositif de relais selon la revendication 6,
dans lequel l'unité de traitement (1130) est configurée pour, lors du remplacement des bits de poids fort par la partie préfixe, mettre en cache des informations relatives à la partie préfixe.

8. Dispositif de relais selon la revendication 7,
dans lequel l'unité de traitement (1130) est configurée pour remplacer les bits de poids fort par la partie préfixe à l'aide des informations mises en cache dans le cas où l'unité de communication (1110) reçoit un paquet adressé à la même adresse que l'adresse IP de couche réseau.

9. Dispositif de relais selon l'une quelconque des revendications 6 à 8,
dans lequel les bits de poids fort représentent au plus 64 bits et/ou les bits de poids faible représentent au plus 64 bits.

10. Procédé de communication sans fil pour un dispositif de communication sans fil mis en œuvre sous forme d'un équipement utilisateur ou d'un nœud de relais (21, 22, 31, 32) d'un domaine (10), comprenant :
la réalisation, par une unité de traitement (240), d'un traitement de communication à l'aide d'une adresse IP de couche réseau dans laquelle un identifiant de routage déterminé pour le domaine (10) est défini sur des bits de poids fort et un identifiant assigné de manière unique à chaque dispositif est défini sur des bits de poids faible,
l'unité de traitement (240), lors de la réception d'un paquet depuis un réseau Internet (2) via une passerelle de réseau de données par paquets, PGW, dans lequel des bits de poids faible d'une adresse de point terminal sont égaux à un identifiant du dispositif de communication sans fil, remplaçant des bits de poids fort de l'adresse de point terminal par ledit identifiant de routage déterminé pour le domaine (10).

11. Procédé de relais pour un dispositif de relais (11) d'un domaine (10) mis en œuvre sous forme d'une passerelle de réseau de données par paquets, PGW, entre le domaine et un réseau Internet (2), comprenant :
la réception, par une unité de communication (1110), d'un paquet adressé à une adresse IP de couche réseau comportant des bits de poids fort prédéterminés et des bits de poids faible prédéterminés ; et
l'acquisition, par une unité de traitement (1130), d'une partie préfixe correspondant aux bits de poids faible pour remplacer les bits de poids fort par la partie préfixe pour l'adresse IP de couche réseau en tant que destination d'un paquet reçu depuis le réseau Internet (2) et adressé à un dispositif de communication sans fil du domaine (10), et
l'acquisition, par l'unité de traitement (1130), de la partie préfixe pour remplacer les bits de poids fort par un identifiant de routage déterminé pour le domaine (10) pour l'adresse IP de couche réseau en tant qu'adresse de point d'origine d'un paquet reçu depuis le domaine et adressé au réseau Internet (2).
